(19) Europäisches Patentamt
European Patent Office
Office européen des brevets

(11) **EP 4 529 272 A1**

(12) **EUROPEAN PATENT APPLICATION**

(43) Date of publication:
**26.03.2025 Bulletin 2025/13**

(21) Application number: **24201388.6**

(22) Date of filing: **19.09.2024**

(51) International Patent Classification (IPC):
*H04W 36/06* (2009.01)   *H04W 28/20* (2009.01)
*H04W 36/16* (2009.01)   *H04W 36/20* (2009.01)
*H04W 36/22* (2009.01)   *H04W 72/0453* (2023.01)
*H04W 88/08* (2009.01)   *H04W 88/14* (2009.01)

(52) Cooperative Patent Classification (CPC):
**H04W 36/06; H04W 28/20;** H04W 36/165;
H04W 36/20; H04W 36/22; H04W 72/0453;
H04W 88/085; H04W 88/14

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.09.2023 IN 202321063542
18.09.2024 US 202418888251**

(71) Applicant: **Mavenir Systems, Inc.
Richardson, TX 75081 (US)**

(72) Inventors:
• **Midde, Sunil Kumar Shetty
516360 Andhra Pradesh (IN)**
• **Taneja, Mukesh
560037 Bangalore (IN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **OPTIMIZED MANAGEMENT OF BANDWIDTH PARTS FOR CELLULAR NETWORKS**

(57)    A method for optimizing bandwidth part (BWP) management for 5G wireless network includes: periodically analyzing, by a BWP analytics module located at one of near-real-time radio access network intelligent controller (near-RT RIC) or a distributed unit (DU) of a gNodeB, at least one of physical resource block (PRB) utilization difference, delay violation percentage corresponding to a percentage of logical channels not able to meet delay requirements for quality of service (QoS) profile assigned to the logical channels, throughput, and interference levels of a BWP to classify the BWP; periodically analyzing, by the BWP analytics module, at least one of PRB utilization, throughput, and delay requirements of at least one user equipipment (UE); and categorizing, by the BWP analytics module, the at least one UE into one of a plurality of BWP classifications based on the analyzing of the at least one of PRB utilization, throughput, and delay requirements.

FIG. 18

**Description**

DESCRIPTION OF THE RELATED TECHNOLOGY

1. Field of the Disclosure

The present disclosure is related to 5G (e.g., New Radio (NR)) wireless networks, and relates more particularly to optimizing Bandwidth Part (BWP) management for 5G wireless networks.

2. Description of Related Art

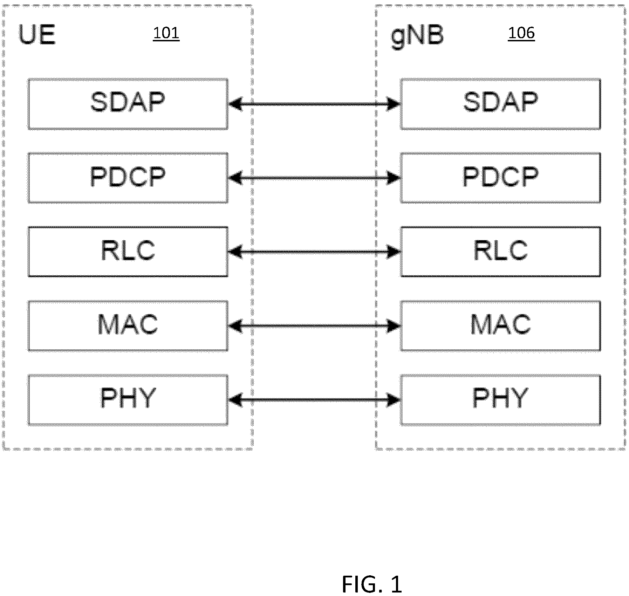

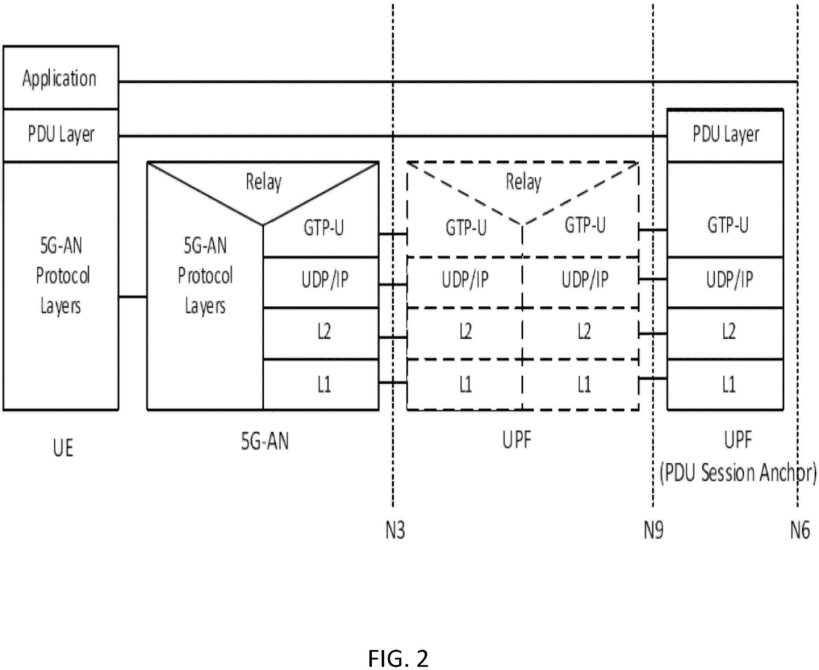

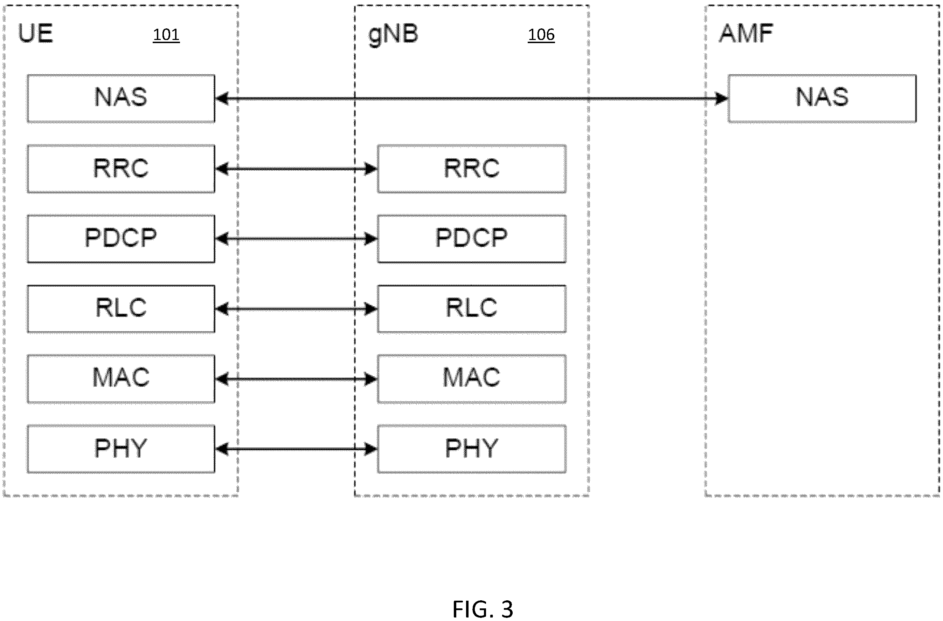

In the following sections, overview of Next Generation Radio Access Network (NG-RAN) architecture and 5G New Radio (NR) stacks will be discussed. 5G NR (New Radio) user and control plane functions with monolithic gNB 106 (gNodeB) are shown in FIGS. 1-3. For the user plane (shown in FIG. 1, which is in accordance with 3GPP TS 38.300), PHY (physical), MAC (Medium Access Control), RLC (Radio Link Control), PDCP (Packet Data Convergence Protocol) and SDAP (Service Data Adaptation Protocol) sublayers are terminated in the gNB 106 on the network side. In addition, as shown in FIG. 2 (which is accordance with 3GPP TS 23.501), which is a block diagram illustrating the user plane protocol stacks for a PDU session of 5G NR, the Protocol Data Unit (PDU) layer corresponds to the PDU carried between the user equipment (UE) 101 and the data network (DN) over the PDU session. The PDU session can correspond to Internet Protocol version 4 (IPv4), IPv6, or both types of IP packets (IPv4v6). General Packet Radio Services (GPRS) Tunneling Protocol - User Plane (GTP-U) supports tunnelling user plane data over N3 and N9 in FIG. 2. It provides encapsulation of end user PDUs for N3 and N9 interfaces. For the control plane (shown in FIG. 3, which is in accordance with 3GPP TS 38.300), RRC (Radio Resource Control), PDCP, RLC, MAC and PHY sublayers are terminated in the gNB 106 on the network side and NAS (Non-Access Stratum) is terminated in the AMF (Access Mobility Function) on the network side.

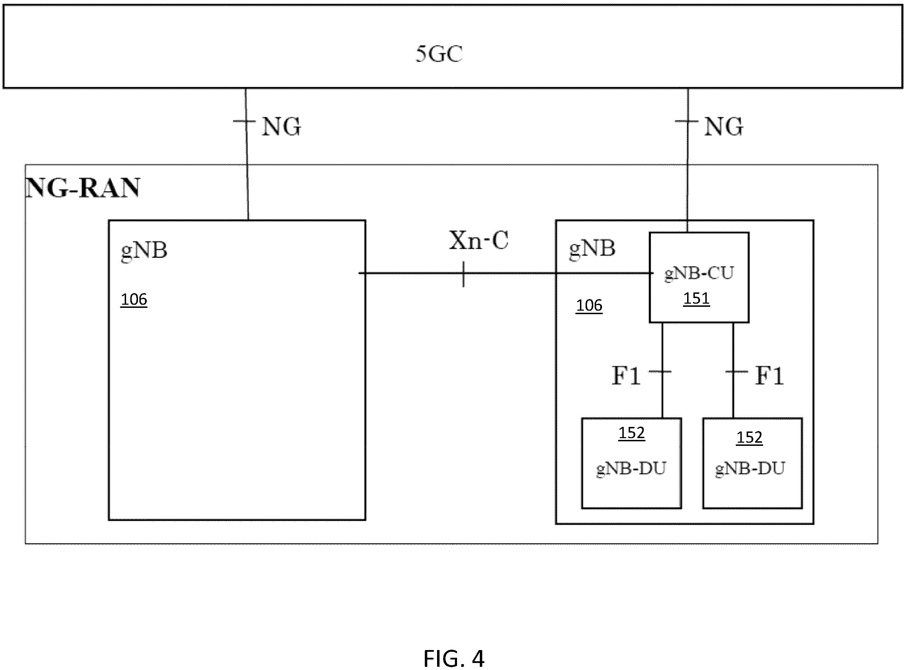

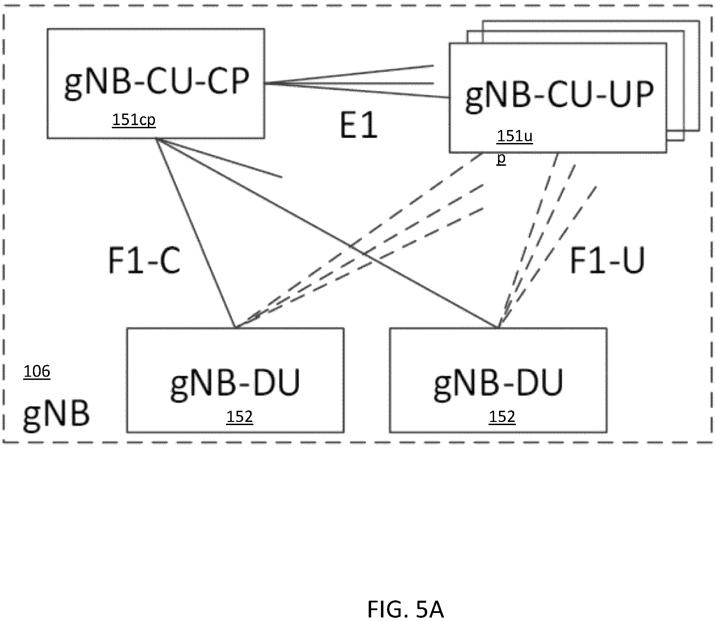

NG-Radio Access Network (NG-RAN) architecture from 3GPP TS 38.401 is shown in FIGS. 4-5. As shown in FIG. 4, the NG-RAN has a set of gNBs 106 connected to the 5GC through the NG interface. As shown in FIG. 4, F1 is the interface between gNB-CU 151 (gNB 106 - Centralized Unit) and gNB-DU 152 (gNB 106 - Distributed Unit), NG is the interface between gNB-CU 151 (or gNB) and 5GC (5G Core), and Xn is interface between gNBs 106 (in FIG. 4, Xn-C connects the first gNB 106 to the gNB-CU 151 of the second gNB). As shown in FIG. 5A (which illustrates separation of CU-CP 151cp (CU-Control Plane) and CU-CP 151up (CU-User Plane)), E1 is the interface between gNB-CU-CP 151cp (CU-Control Plane) and gNB-CU-CP 151up (CU-User Plane), F1-C is the interface between gNB-CU-CP 151cp and gNB-DU 152, and F1-U is the interface between gNB-CU-CP 151up and gNB-DU 152. A gNB 106 can have of a gNB-CU-CP 151cp, multiple gNB-CU-CP 151ups and multiple gNB-DUs 152. One gNB-DU 152 is connected to only one gNB-CU-CP 151cp and one gNB-CU-CP 151up is connected to only one gNB-CU 151. FIG. 4B shows an example of a Separation of 4G CU-CP (CU-Control Plane) and CU-UP (CU-User Plane). The example shown in FIG. 4B shows ng-eNB but legacy eNB also applies same architecture.

In this section, an overview Layer 2 (L2) of 5G NR will be provided. L2 of 5G NR is split into the following sublayers (in accordance with 3GPP TS 38.300):

1) Medium Access Control (MAC): The MAC sublayer offers Logical Channels (LCs) to the RLC sublayer. This MAC layer runs a MAC scheduler to schedule radio resources across different LCs (and their associated radio bearers).

2) Radio Link Control (RLC): The RLC sublayer offers RLC channels to the Packet Data Convergence Protocol (PDCP) sublayer. The RLC sublayer supports three transmission modes: RLC-Transparent Mode (RLC-TM), RLC-Unacknowledged Mode (RLC-UM) and RLC-Acknowledgement Mode (RLC-AM). RLC configuration is per logical channel. It hosts ARQ (Automatic Repeat Request) protocol for RLC-AM mode.

3) Packet Data Convergence Protocol (PDCP): The PDCP sublayer offers Radio Bearers (RBs) to the SDAP sublayer. There are two types of Radio Bearers: Data Radio Bearers (DRBs) for data, and Signaling Radio Bearers (SRBs) for control plane.

4) Service Data Adaptation Protocol (SDAP): The SDAP offers QoS Flows to the 5GC (5G Core). This sublayer provides mapping between a QoS flow and a DRB. It marks QoS Flow Id in DL (downlink) as well as UL (uplink packets).

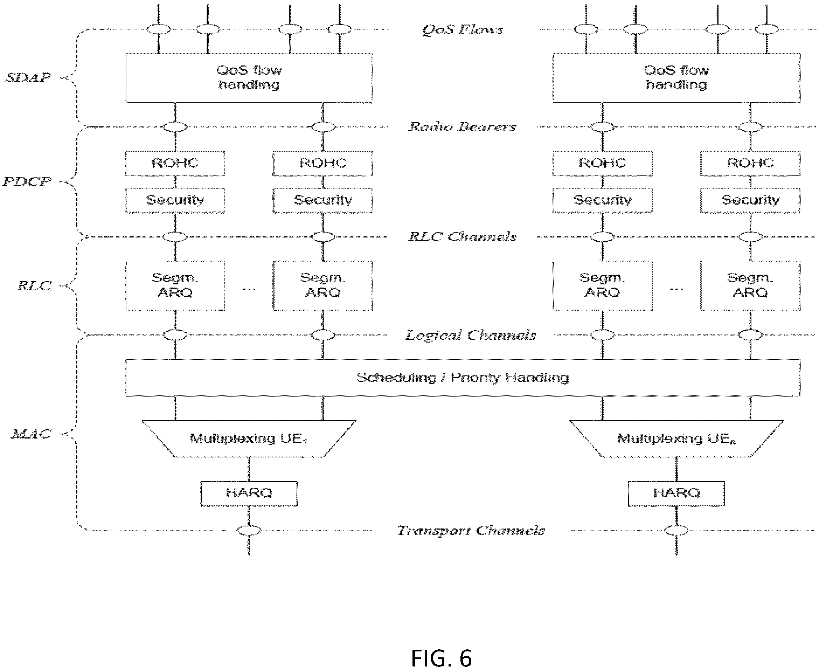

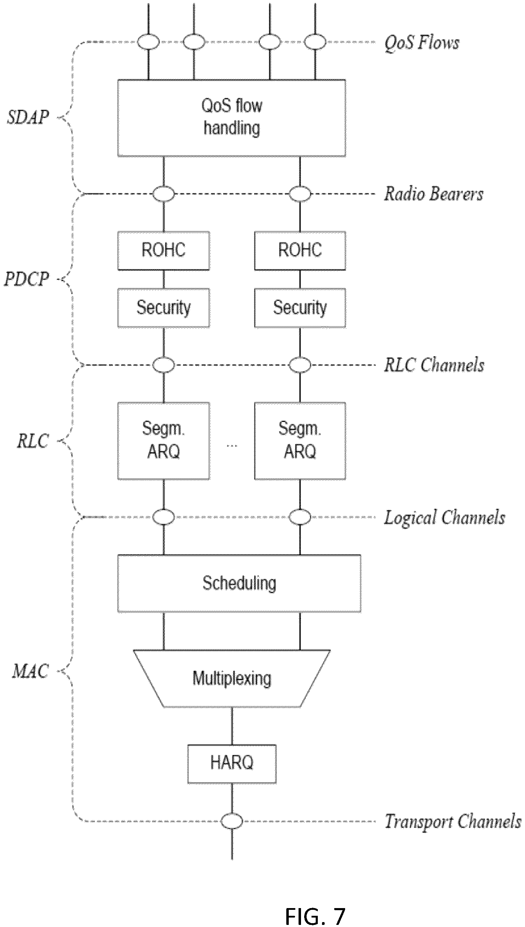

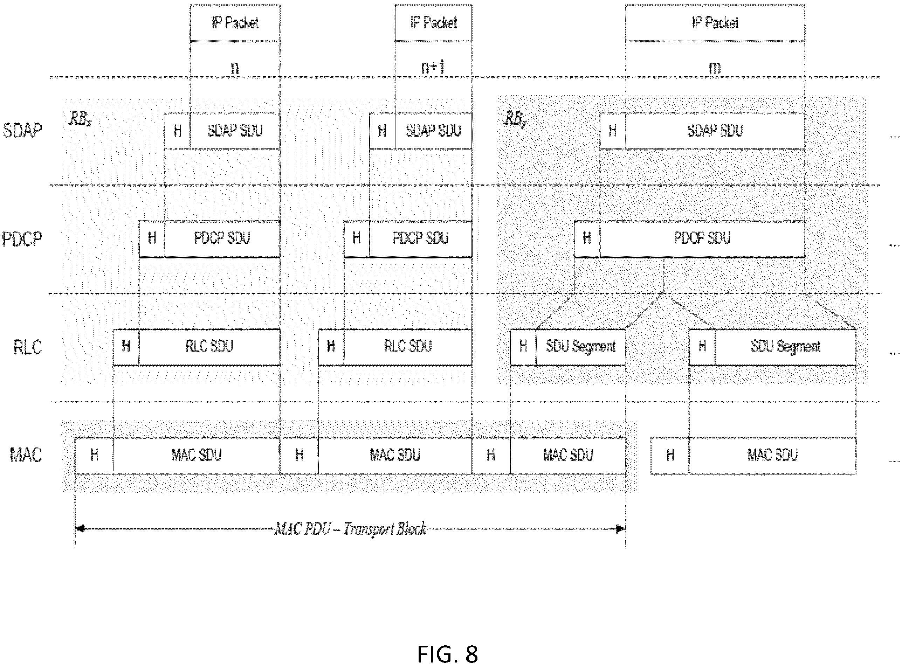

FIG. 6 is a block diagram illustrating DL L2 structure, in accordance with 3GPP TS 38.300. FIG. 7 is a block diagram illustrating UL L2 structure, in accordance with 3GPP TS 38.300. FIG. 8 is a block diagram illustrating L2 data flow example, in accordance with 3GPP TS 38.300 (in FIG. 8, H denotes headers or sub-headers).

In the following sections, downlink (DL) and uplink (UL) physical channels and signals are discussed. A DL physical channel corresponds to a set of resource elements carrying information originating from higher layers. The following downlink physical channels are defined (see, e.g., 3GPP TS 38.211): 1) Physical Broadcast Channel (PBCH) is used to carry MIB; 2) Physical Downlink Control Channel (PDCCH) transfers Downlink Control Information (DCI), which is used by the Base Station packet scheduler to allocate both uplink and downlink resources (i.e., PUSCH and PDSCH resources, respectively) (note that DCI can also be used to provide uplink power control commands, configure the slot format, BWP switching, and to indicate that pre-emption has occurred); 3) Physical Downlink Shared Channel (PDSCH) is the physical downlink channel that carries user data.

An uplink (UL) physical channel corresponds to a set of resource elements carrying information originating from higher layers. The following uplink physical channels are defined (see, for example, 3GPP TS 38.211): 1) Physical Uplink Shared Channel (PUSCH) is the physical uplink channel that carries user data; 2) Physical Uplink Control Channel (PUCCH) is used to transport UCI (Uplink Control Information), for example, HARQ feedback, Channel State Information (SCI), and Scheduling Request (SR);and 3) Physical Random-Access Channel (PRACH) is used to carry random access preamble from UE 101 towards gNB 106.

Downlink reference signals include the following: 1) Channel State Information Reference Signal (CSI-RS) is used by the UE 101 to measure and report channel quality, for example, Channel Quality Indicator (CQI) reports; 2) Demodulation reference signal (DMRS) is specific to each UE 101 and is used to estimate the radio channel; and 3) Phase Tracking Reference Signal (PTRS), the main function of which is to track the phase of the Local Oscillator at transmitter and receiver.

Uplink reference signals include the following: 1) Demodulation reference signal (DMRS) is specific to each UE 101 and is used to estimate the radio channel; 2) Phase Tracking Reference Signal (PTRS), the main function of which is to track the phase of the Local Oscillator at transmitter and receiver; and 3) Sounding Reference Signal (SRS) is a reference signal for Uplink (i.e., transmitted by UE) so that gNB 106 can perform channel quality estimation for uplink.

Regarding subcarrier spacing (SCS), multiple Orthogonal Frequency Division Multiplexing (OFDM) numerologies ($\mu$) are supported in NR, and subcarrier spacing of, for example, 15, 30, 60, 120 and 240 KHz are supported. Table 1 below provides information on numerologies supported in NR and cyclic prefix used for each numerology.

Table 1

| $\mu$ | $\Delta f = 2^{\mu} \cdot 15$ [kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |
| 5 | 480 | Normal |
| 6 | 960 | Normal |

The 5G spectrum resources defined in the 3GPP protocol can be divided into two frequency ranges, FR1 and FR2: 1) FR1 includes Sub-6 Ghz bands (examples: 3500 MHz band (n78), 3700 MHz band (n77)); 2) FR2 includes frequencies above 24 GHz, and is commonly referred to as millimeter wave (mmWave) (example: 24.25-27.5 GHz band (n257)).

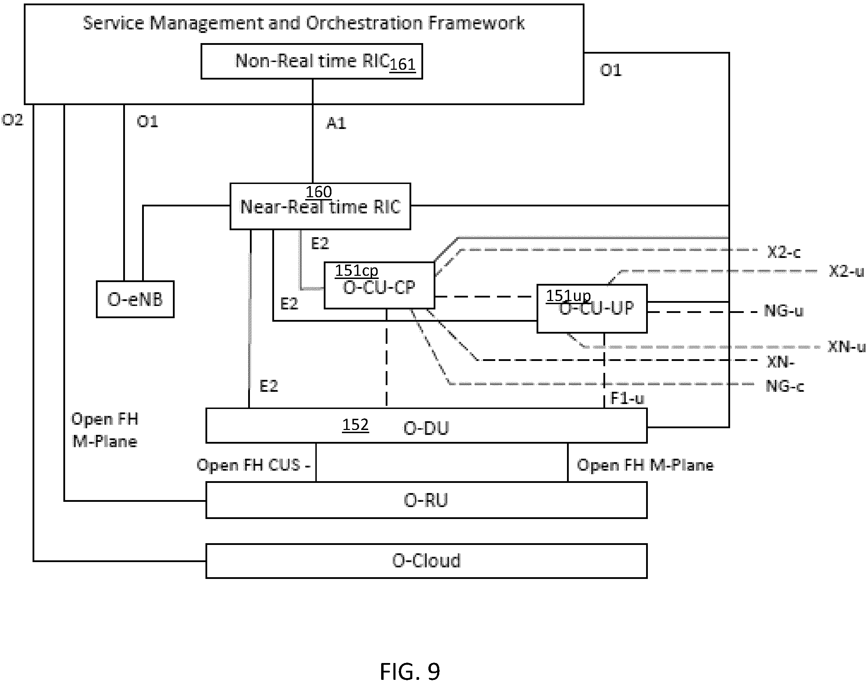

Open Radio Access Network (O-RAN) is based on disaggregated components that are connected through open and standardized interfaces based on 3GPP NG-RAN. An overview of O-RAN with disaggregated RAN CU 151 (Centralized Unit), DU 152, and RU (Radio Unit), near-real-time Radio Intelligent Controller (near-RT RIC) 160 and non-RT RIC 161 is illustrated in FIG. 9.

As shown in FIG. 9, the CU 151 and the DU 152 are connected using the F1 interface (with F1-C for control plane and F1-U for user plane traffic) over a mid-haul (MH) path. One DU 152 can host multiple cells (for example, one DU 152 can host 24 cells) and each cell can support many users. For example, one cell can support 600 Radio Resource Control (RRC)-connected users and out of these 600, there may be 200 Active users (i.e., users that have data to send at a given point of time).

A cell site can comprise multiple sectors, and each sector can support multiple cells. For example, one site can comprise three sectors and each sector could support eight cells (with eight cells in each sector on different frequency bands). One CU-CP (CU-Control Plane) can support multiple DUs 152 and thus multiple cells. For example, a CU-CP can support 1,000 cells and around 100,000 User Equipments (UEs 101). Each UE 101 can support multiple Data Radio Bearers (DRB) and there can be multiple instances of CU-UP (CU-User Plane) to serve these DRBs. For example, each UE 101 can support 4 DRBs, and 400,000 DRBs (corresponding to 100,000 UEs 101) can be served by five CU-UP instances (and one CU-CP instance).

The DU 152 can be located in a private data center, or it could be located at a cell-site. The CU 151 can also be in a private data center or even hosted on a public cloud system. The DU 152 and CU 151, which are typically located at different physical locations, can be tens of kilometers apart. The CU 151 communicates with a 5G core system, which can also be hosted in the same public cloud system (or could be hosted by a different cloud provider). A RU (Radio Unit) is located at a cell-site and communicates with the DU 152 via a front-haul (FH) interface.

The E2 nodes (CU 151 and DU 152) are connected to the near-real-time RIC 160 using the E2 interface. The E2 interface is used to send data (e.g., user and/or cell KPMs) from the RAN, and deploy control actions and policies to the RAN at near-real-time RIC 160. The application or service at the near-real-time RIC 160 that deploys the control actions and policies to the RAN are called xApps. The near-real-time RIC 160 is connected to the non-real-time RIC 161 using the A1 interface.

The E2 interface specifications facilitate the following: 1) connectivity between Near-RT RIC 160 and E2 Node supplied by different vendors; 2) exposure of selected E2 Node data (e.g., configuration information (cell configuration, supported slices, PLMNs, and the like), network measurements, context information, and the like) towards the Near-RT RIC 160; and 3) enabling the Near-RT RIC 160 to control selected functions on the E2 Node. The functions of the E2 interface are grouped into the following categories: 1) Near-RT RIC 160 services; 2) Near-RT RIC 160 support functions; and 3) O-RAN-specified E2 service models. Thse categories of functions will be discussed below.

Regarding Near-RT RIC 160 services, the Near-RT RIC 160 can use the following RIC services provided by an E2 node:

1) REPORT: Near-RT RIC 160 uses an RIC Subscription message to request that E2 Node send a REPORT message to Near-RT RIC 160, and the associated procedure continues in the E2 Node after each occurrence of a defined RIC Subscription procedure Event Trigger.

2) INSERT: Near-RT RIC 160 uses an RIC Subscription message to request that E2 Node send an INSERT message to Near-RT RIC 160, and suspends the associated procedure in the E2 Node after each occurrence of a defined RIC Subscription procedure Event Trigger.

3) CONTROL: Near-RT RIC 160 sends a CONTROL message to E2 Node to initiate a new associated procedure or resume a previously suspended associated procedure in the E2 Node.

4) POLICY: Near-RT RIC 160 uses an RIC Subscription message to request that E2 Node execute a specific POLICY during functioning of the E2 Node after each occurrence of a defined RIC Subscription procedure Event Trigger.

Near-RT RIC 160 support functions include: 1) Interface Management (E2 Setup, E2 Reset, E2 Node Configuration Update, E2 Removal, Reporting of General Error Situations); and 2) Near-RT RIC 160 Service Update, that is, an E2-Node-initiated procedure to inform Near-RT RIC 160 of changes to the list of supported Near-RT RIC 160 services and mapping of services to functions.

Regarding O-RAN-specified E2 service models, a given RAN function offers a set of services to be exposed over the E2 (REPORT, INSERT, CONTROL and/or POLICY) using E2AP. These services are offered using following service models:

1) E2SM-NI: RAN Function "Network Interface" (NI) performs the following functionalities:

a) Exposure of Network Interfaces;

b) Modification of both incoming and outgoing network interface message contents; and

c) Execution of policies that can result in change of network behavior.

2) E2SM-KPM: RAN function "KPM Monitor" (KPM) performs the following functionalities:

a) Exposure of O-DU's cell related performance IEs through periodic KPM Report;

b) Exposure of O-CU-CP's cell/UE 101 related performance IEs through periodic KPM Report; and

c) Exposure of O-CU-UP's bearer related performance IEs through periodic KPM Report.

3) E2SM-RC: RAN function RC "RAN Control" performs the following functionalities:

a) Exposure of RAN control and UE 101 context related information;

b) Modification and initiation of RAN-control-related call processes and messages; and

c) Execution of policies that can result in change of RAN control behavior.

4) E2SM-CCC: RAN function CCC "Cell Configuration and Control" performs the following functionalities:

a) Exposure of node level and cell level configuration information; and

b) Initiate control and/or configuration of node-level and cell-level parameters.

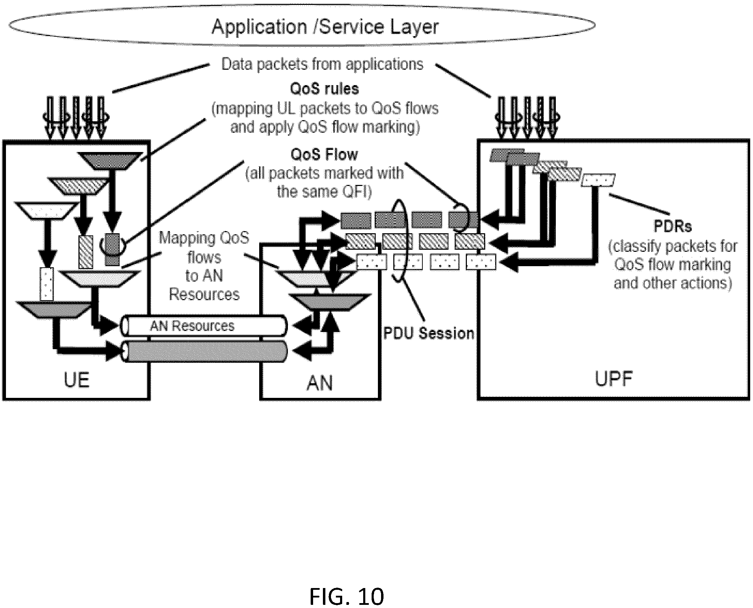

In this section, PDU sessions, DRBs, and quality of service (QoS) flows will be discussed. In 5G networks, PDU connectivity service is a service that provides exchange of PDUs between a UE 101 and a data network identified by a Data Network Name (DNN). The PDU Connecitivity service is supported via PDU sessions that are established upon request from the UE 101. The DNN defines the interface to a specific external data network. One or more QoS flows can be supported in a PDU session. All the packets belonging to a specific QoS flow have the same 5QI (5G QoS Identifier). A PDU session has of the following: Data Radio Bearer that is between UE 101 and CU 151 in RAN; and an NG-U GTP tunnel that is between CU 151 and UPF (User Plane Function) in the core network. FIG. 10 illustrates an example PDU session (in accordance with 3GPP TS 23.501) having multiple DRBs, where each DRB can include of multiple QoS flows. In FIG. 10, three components are shown for the PDU session: UE 101; access network (AN); and UPF, which includes Packet Detection Rules (PDRs).

The following should be noted for 3GPP 5G network architecture:

1) The transport connection between the base station (CU-UP) and the UPF uses a single GTP-U tunnel per PDU session. The PDU session is identified using GTP-U TEID (Tunnel Endpoint Identifier).

2) The transport connection between the DU 152 and the CU-UP uses a single GTP-U tunnel per DRB.

3) SDAP:

a) The SDAP (Service Adaptation Protocol) Layer receives downlink data from the UPF across the NG-U interface.

b) The SDAP maps one or more QoS Flow(s) onto a specific DRB.

c) The SDAP header is present between the UE 101 and the CU 151 (when reflective QoS is enabled), and includes a field to identify the QoS flow within a specific PDU session.

4) User plane protocol includes a field to identify the QoS flow (QoS Flow Identifier) and is present between CU 151 and UPF (in the core network).

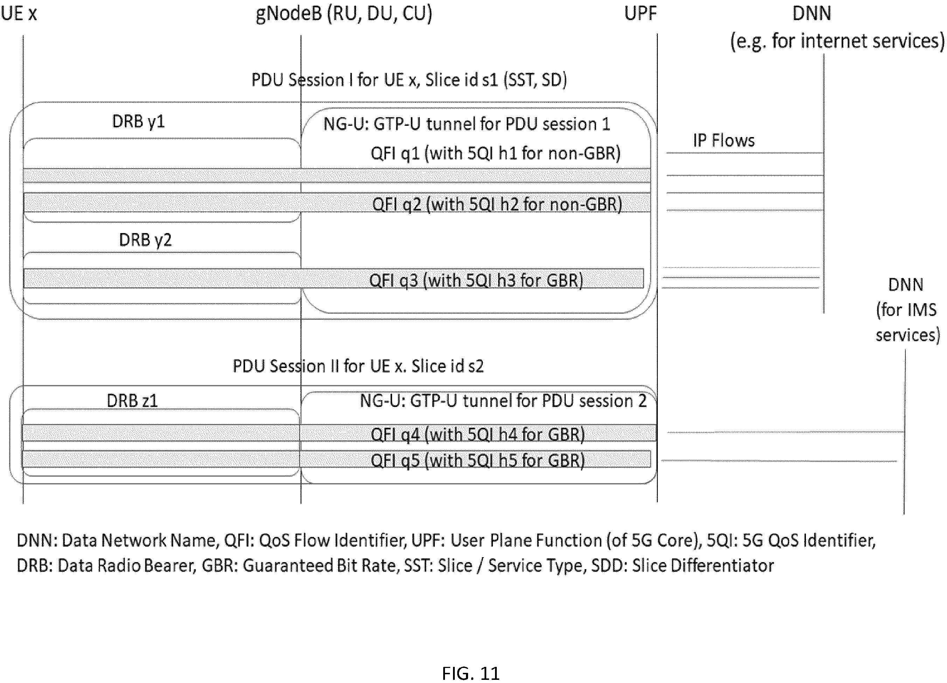

FIG. 11 illustrates multiple PDU sessions involving multiple DRBs and QoS Flow Identifiers (QFIs).

In this section, standardized 5QI to QoS characteristics mapping will be discussed. As per 3GPP TS 23.501, the one-to-one mapping of standardized 5QI values to 5G QoS characteristics is specified in Table 2A and Table 2B (which is a continuation of Table 2B) and the accompanying Notes shown below. The first column represents the 5QI value. The second column lists the different resource types, i.e., as one of Non-GBR, GBR, Delay-critical GBR. The third column ("Default Priority Level") represents the priority level Priority5QI, for which the lower the value the higher the priority of the corresponding QoS flow. The fourth column represents the Packet Delay Budget (PDB), which defines an upper bound for the time that a packet can be delayed between the UE 101 and the N6 termination point at the UPF. The fifth column represents the Packet Error Rate (PER). The sixth column represents the maximimum data burst volume for delay-critical GBR types. The seventh column represents averaging window for GBR, delay critical GBR types.

Table 2A

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 1 | GBR (NOTE 1) | 20 | 100 ms (NOTE 11, NOTE 13) | $10^{-2}$ | N/A | 2000 ms | Conversational Voice |
| 2 | | 40 | 150 ms (NOTE 11, NOTE 13) | $10^{-3}$ | N/A | 2000 ms | Conversational Video (Live Streaming) |
| 3 | | 30 | 50 ms (NOTE 11, NOTE 13) | $10^{-3}$ | N/A | 2000 ms | Real Time Gaming, V2X messages (see TS 23.287 [121]). Electricity distribution - medium voltage, Process automation monitoring |
| 4 | | 50 | 300 ms (NOTE 11, NOTE 13) | $10^{-6}$ | N/A | 2000 ms | Non-Conversational Video (Buffered Streaming) |
| 65 (NOTE 9, NOTE 12) | | 7 | 75 ms (NOTE 7, NOTE 81 | $10^{-2}$ | N/A | 2000 ms | Mission Critical user plane Push To Talk voice (e.g., MCPTT) |
| 66 (NOTE 12) | | 20 | 100 ms (NOTE 10, NOTE 13) | $10-2$ | N/A | 2000 ms | Non-Mission-Critical user plane Push To Talk voice |
| 67 (NOTE 12) | | 15 | 100 ms (NOTE 10, NOTE 13) | $10^{-3}$ | N/A | 2000 ms | Mission Critical Video user plane |
| 75 (NOTE 14) | | | | | | | |
| 71 | | 56 | 150 ms (NOTE 11, NOTE 13, NOTE 151 | $10^{-6}$ | N/A | 2000 ms | "Live" Uplink Streaming (e.g. TS 26.238 [76]) |

(continued)

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 72 | | 56 | 300 ms (NOTE 11, NOTE 13, NOTE 15) | $10^{-4}$ | N/A | 2000 ms | "Live" Uplink Streaming (e.g. TS 26.238 [76]) |
| 73 | | 56 | 300 ms (NOTE 11, NOTE 13, NOTE 151) | $10^{-8}$ | N/A | 2000 ms | "Live" Uplink Streaming (e.g. TS 26.238 [76]) |
| 74 | | 56 | 500 ms (NOTE 11, NOTE 15) | $10^{-8}$ | N/A | 2000 ms | "Live" Uplink Streaming (e.g. TS 26.238 [76]) |
| 76 | | 56 | 500 ms (NOTE 11, NOTE 13, NOTE 15) | $10^{-4}$ | N/A | 2000 ms | "Live" Uplink Streaming (e.g. TS 26238 [76]) |
| 5 | Non-GBR (NOTE 1) | 10 | 100 ms NOTE 10, NOTE 13) | $10^{-6}$ | N/A | N/A | IMS Signalling |
| 6 | | 60 | 300 ms (NOTE 10, NOTE 13) | $10^{-6}$ | N/A | N/A | Video (Buffered Streaming) TCP-based (e.g., www, e-mail, chat, ftp, p2p file sharing, progressive video, etc.) |
| 7 | | 70 | 100 ms (NOTE 10, NOTE 13) | $10^{-3}$ | N/A | N/A | Voice, Video (Live Streaming) Interactive Gaming |

Table 2B

| 8 | | 80 | 300 ms (NOTE 13) | $10^{-6}$ | N/A | N/A | Video (Buffered Streaming) TCP-based (e.g., www, e-mail, chat, ftp, p2p file sharing, progressive |
|---|---|---|---|---|---|---|---|
| 9 | | 90 | | | | | video, etc.) |

(continued)

| | | | | | | | |
|---|---|---|---|---|---|---|---|
| 69 (NOTE 9, NOTE 12) | | 5 | 60 ms (NOTE 7, NOTE 8) | $10^{-6}$ | N/A | N/A | Mission Critical delay sensitive signalling (eg., MC-PTT signalling) |
| 70 (NOTE 12) | | 55 | 200 ms (NOTE 7, NOTE 10) | $10^{-6}$ | N/A | N/A | Mission Critical Data (e.g. example services are the same as 5QI 6/8/9) |
| 79 | | 65 | 50 ms (NOTE 10, NOTE 13) | $10^{-2}$ | N/A | N/A | V2X messages (see TS 23.287 [121]) |
| 80 | | 68 | 10 ms (NOTE 5, NOTE 10) | $10^{-6}$ | N/A | N/A | Low Latency eMBB applications Augmented Reality |
| 82 | Delay Critical GBR | 19 | 10 ms (NOTE 4) | $10^{-4}$ | 255 bytes | 2000 ms | Discrete Automation (see TS 22.261 [2]) |
| 83 | | 22 | 10 ms (NOTE 4) | $10^{-4}$ | 1354 bytes (NOTE 3) | 2000 ms | Discrete Automation (see TS 22.261 [2]); V2X messages (UE - RSU Platooning, Advanced Driving: Cooperative Lane Change with low LoA. See TS 22.186 [111], TS 23 187 [121]) |
| 84 | | 24 | 30 ms (NOTE 6) | | 1354 bytes (NOTE 3) | 2000 ms | Intelligent transport systems (see TS 22.261 [2]) |
| 85 | | 21 | 5 ms (NOTE 5) | $10^{-5}$ | 255 bytes | 2000 ms | Electricity Distribution-high voltage (see TS 22.261 [2]). V2X messages (Remote Driving. See TS 22.186 [111], NOTE 16, see TS 23287 [121]) |
| $6 | | 18 | 5 ms (NOTE 5) | $10^{-4}$ | 1354 bytes | 2000 ms | V2X messages (Advanced Driving: Collision Avoidance, Platooning with high LoA. See TS 22.186 [111], TS 23287 [121]) |

| | |
|---|---|
| NOTE 1: | A packet which is delayed more than PDB is not counted as lost, thus not included in the PER. |
| NOTE 2: | It is required that default MDBV is supported by a PLMN supporting the related 5QIs. |
| NOTE 3: | The Maximum Transfer Unit (MTU) size considerations in clause 9.3 and Annex C of TS 23.060 [56] are also applicable. IP fragmentation may have impacts to CN PDB, and details are provided in clause 5.6.10. |
| NOTE 4: | A static value for the CN PDB of 1 ms for the delay between a UPF terminating N6 and a 5G-AN should be subtracted from a given PDB to derive the packet delay budget that applies to the radio interface. When a dynamic CN PDB is used, see clause 5.7.3.4. |
| NOTE 5: | A static value for the CN PDB of 2 ms for the delay between a UPF terminating N6 and a 5G-AN should be subtracted from a given PDB to derive the packet delay budget that applies to the radio interface. When a dynamic CN PDB is used, see clause 5.7.3.4. |

| NOTE 6: | A static value for the CN PDB of 5 ms for the delay between a UPF terminating N6 and a 5G-AN should be subtracted from a given PDB to derive the packet delay budget that applies to the radio interface. When a dynamic CN PDB is used, see clause 5.7.3.4. |
|---|---|
| NOTE 7: | For Mission Critical services, it may be assumed that the UPF terminating N6 is located "close" to the 5G_AN (roughly 10 ms) and is not normally used in a long distance, home routed roaming situation. Hence a static value for the CN PDBof 10 ms for the delay between a UPF terminating N6 and a 5G_AN should be subtracted from this PDB to derive the packet delay budget that applies to the radio interface. |
| NOTE 8: | In both RRC Idle and RRC Connected mode, the PDB requirement for these 5QIs can be relaxed (but not to a value greater than 320 ms) for the first packet(s) in a downlink data or signalling burst in order to permit reasonable battery saving (DRX) techniques. |
| NOTE 9: | It is expected that 5QI-65 and 5QI-69 are used together to provide Mission Critical Push to Talk service (e.g. 5QI-5 is not used for signalling). It is expected that the amount of traffic per UE will be similar or less compared to the IMS signalling. |
| NOTE 10: | In both RRC Idle and RRC Connected mode, the PDB requirement for these 5QIs can be relaxed for the first packet(s) in a downlink data or signalling burst in order to permit battery saving (DRX) techniques. |
| NOTE 11: | In RRC Idle mode, the PDB requirement for these 5QIs can be relaxed for the first packet(s) in a downlink data or signalling burst in order to permit battery saving (DRX) techniques. |
| NOTE 12: | This 5QI value can only be assigned upon request from the network side. The UE and any application running on the UE is not allowed to request this 5QI value. |
| NOTE 13: | A static value for the CN PDB of 20 ms for the delay between a UPF terminating N6 and a 5G-AN should be subtracted from a given PDB to derive the packet delay budget that applies to the radio interface. |
| NOTE 14: | This 5QI is not supported in this Release of the specification as it is only used for transmission of V2X messages over MBMS bearers as defined in TS 23.285 [72] but the value is reserved for future use. |
| NOTE 15: | For "live" uplink streaming (see TS 26.238 [76]), guidelines for PDB values of the different SQIs correspond to the latency configurations defined in TR 26.939 [77]. In order to support higher latency reliable streaming services (above 500ms PDB), if different PDB and PER combinations are needed these configurations will have to use non-standardised 5QIs. |
| NOTE 16: | These services are expected to need much larger MDBV values to be signalled to the PAN. Support for such larger MDBV values with low latency and high reliability is likely to require a suitable RAN configuration, for which, the simulation scenarios in TR 38.824 [112] may contain some guidance. |

For example, as shown in Table 2A, 5QI value 1 is of resource type GBR with the default priority value of 20, PDB of 100ms, PER of 0.01, and averaging widnow of 2000 ms. Conversational voice falls under this catogery. Similarly, as shown in Table 2A, 5QI value 7 is of resource tye Non-GBR with the default priority value of 70, PDB of 100ms and PER of 0.001. Voice, video (live streaming), and interactive gaming fall under this catogery.

In this section, Bandwidth Part (BWP) is discussed. A BWP is a set of contiguous Common Resource Blocks. A BWP can include all Common Resource Blocks within the channel bandwidth, or a subset of Common Resource Blocks. Common Resource Blocks are the set of Resource Blocks which occupy the channel bandwidth. There is a set of Common Resource Blocks for each subcarrier spacing. A UE 101 can be configured with up to four bandwidth parts in the downlink, with a single downlink bandwidth part being active at a given time. The UE 101 is not expected to receive PDSCH, PDCCH, or CSI-RS (except for RRM) outside an active bandwidth part. A UE 101 can be configured with up to four bandwidth parts in the uplink, with a single uplink bandwidth part being active at a given time. If a UE 101 is configured with a supplementary uplink, the UE 101 can be additionally configured with up to four bandwidth parts in the supplementary uplink, with a single supplementary uplink bandwidth part being active at a given time. The UE 101 does not transmit PUSCH or PUCCH outside an active bandwidth part. For an active cell, the UE 101 does not transmit SRS outside an active bandwidth part. A UE 101 can complete measurements outside the active bandwidth part, but this can require the use of Measurement Gaps.

FIGS. 12, 13 and 14 illustrate different BWP allocation scenarios. FIG. 12 illustrates an example BWP allocation in which BWP1 supports reduced UE 101 bandwidth. FIG. 13 illustrates an example BWP allocation in which BWP1 and BWP2 support mixed numerology (from gNB 106 perspective). FIG. 14 illustrates an example BWP allocation in which BWP1 and BWP2 support reduced UE 101 energy consumption.

Each BWP has specific physical characteristics including frequency location, bandwidth, SCS, and cyclic prefix. UE 101 configuration needs to convey at least the physical characteristics of the associated BWP. The IE BWP is used to configure generic parameters of a bandwidth part, as follows:

BWP:: = SEQUENCE {

    locationAndBandwidth        INTEGER (0...37949),

    subcarrierSpacing            SubcarrierSpacing,

    cyclicPrefix                ENUMERATED {extended} OPTIONAL -- Need R

    }

The field "locationAndBandwidth" indicates the frequency domain location and bandwidth of this BWP. The value of the field "locationAndBandwidth" is interpreted as resource indicator value (RIV) as defined in TS 38.214, with assumptions as described in TS 38.213, clause 12, i.e., setting $N_{BWP}^{Size}=275$. A RIV corresponds to a starting virtual resource block (RBstart) and a length in terms of contiguously allocated resource blocks $L_{RBs}$, i.e.,

$$\text{if } (L_{RBs}-1) \le \left\lfloor N_{BWP}^{size}/2 \right\rfloor \text{ then}$$

$$RIV = N_{BWP}^{size}(L_{RBs}-1) + RB_{start}$$

$$\text{else}$$

$$RIV = N_{BWP}^{size}(N_{BWP}^{size} - L_{RBs} + 1) + (N_{BWP}^{size} - 1 - RB_{start})$$

$$\text{where } L_{RBs} \ge 1 \text{ and shall not exceed } N_{BWP}^{size} - RB_{start}.$$

Assuming $N_{BWP}^{Size}=275$, the following examples can be seen:

$$RB_{start} = 0 \text{ and } L_{RBs} = 100 \text{ RBs} \rightarrow RIV = 27225$$

$$RB_{start} = 5 \text{ and } L_{RBs} = 150 \text{ RBs} \rightarrow RIV = 34224$$

In this section, different types of BWP (e.g., initial BWP, first active DL/UL BWP, and default BWP) are discussed. The initial (DL and UL) BWPs are used at least for initial access before radio resource control (RRC) connection is established. An initial BWP has index zero and is referred to as BWP #0. To access the system, the UE 101 needs to further read system information block 1 (SIB1), which carries important information including the initial DL/UL BWP configuration. The initialDownlinkBWP parameter structure can also be provided to the UE 101 using dedicated signaling. The first active (DL and UL) BWPs can be configured for primary Cell (PCell) or a secondary cell (SCell). The first active DL and UL BWPs are the active DL and UL BWPs upon RRC configuration (or reconfiguration) for a PCell or activation of a SCell.

For a serving cell, the network can configure the UE 101 with a BWP inactivity timer. UE 101 can switch its active BWP to a default BWP to save power when BWP inactivity timer expires. If a default BWP is not configured, the UE 101 uses the initial DL BWP as the default DL BWP. For unpaired spectrum, when the UE 101 switches its active DL BWP to the default DL BWP, the active UL BWP is also switched accordingly since the BWP switching for TDD is common for both DL and UL. For each serving cell, the network configures at least an initial downlink bandwidth part and one (if the serving cell is configured with an uplink) or two (if using supplementary uplink (SUL)) initial uplink bandwidth parts. Furthermore, the network can configure additional uplink and downlink bandwidth parts for a serving cell.

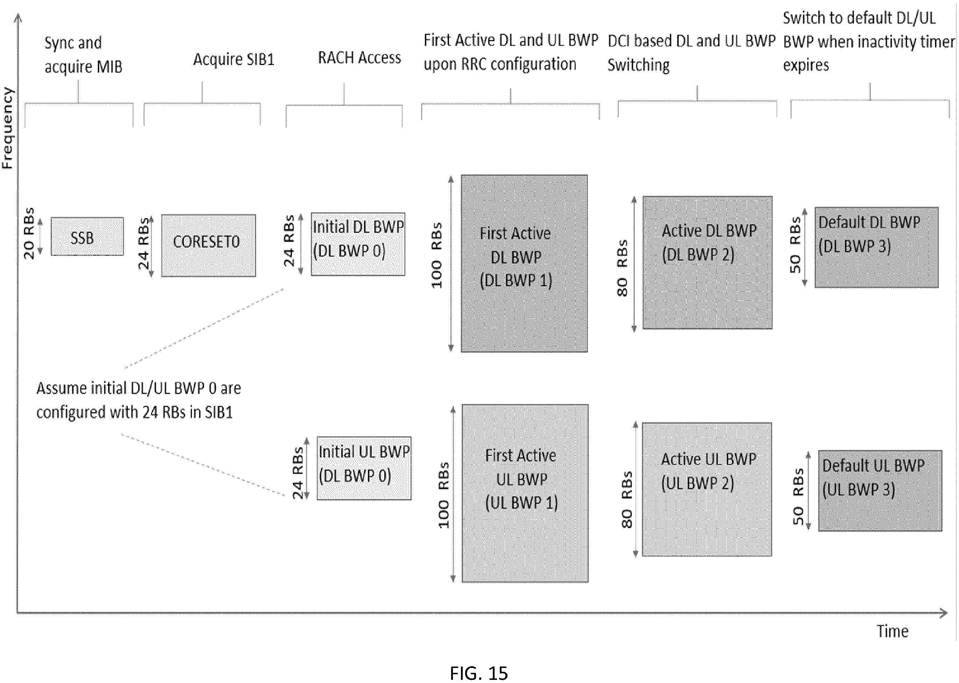

FIG. 15 illustrates an example of how UE 101 performs synchronization and the RACH access with initial DL (or UL) BWP, followed by BWP adaptation. A gNB 106 configures with other BWPs and inform the first active BWP ID. The active BWP (e.g., in FIG. 15, DL BWP 1 and UL BWP 1) is switched to one of the other BWPs when needed via DCI-based switching (e.g., to DL BWP 2 and UL BWP 2, respectively) and/or timer-based switching (e.g., to DL BWP 3 and UL BWP 3, respectively).

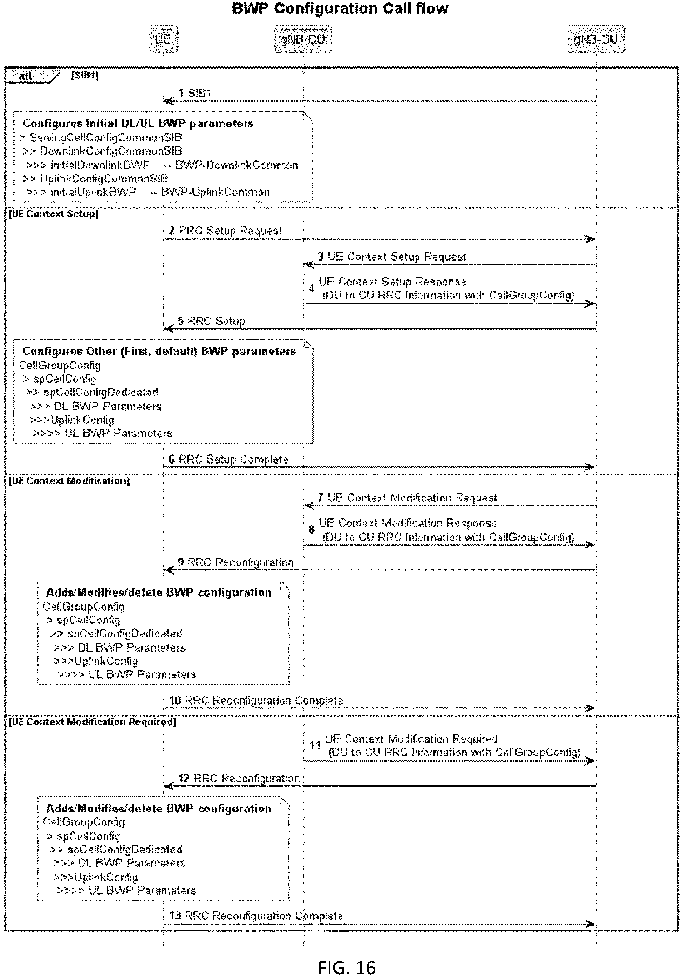

FIG. 16 illustrates an example call flow (e.g., as per 3GPP TS 38.473 and 38.331) for configuration of DL and UL BWP parameters by DU and the corresponding RRC and F1AP messages involved. The DL and UL BWP configuration parameters are divided into common paramters and dedicated parameters.

1) BWP-Common (Cell-specific) Parameters: The BWP-common parameters for a DL BWP with a non-zero index include basic cell-specific BWP parameters (frequency domain location, bandwidth, SCS, and cyclic prefix of this BWP) and additional cell-specific parameters for the PDCCH and PDSCH of this DL BWP. The BWP-common parameters for an UL BWP with a non-zero index include basic BWP parameters and cell-specific parameters for the random access, PUCCH, and PUSCH of this UL BWP. The network needs to ensure that the corresponding parameters are appropriately aligned across the UEs.

2) BWP-Dedicated (UE-specific) Parameters: The BWP-dedicated parameters for a DL BWP with a non-zero index include UE-specific parameters for the PDCCH, PDSCH, semi-persistent scheduling, and radio link monitoring configurations of this DL BWP. The BWP-dedicated parameters for a UL BWP with a non-zero index include UE-specific parameters for the PUCCH, PUSCH, configured grant, SRS, and beam failure recovery configurations of this UL BWP.

In this section, BWP switching, activation and deactivation are discussed. Different mechanism for BWP switching include: RRC Reconfiguration BWP Switch; DCI-Based BWP Switch; and Timer-Based BWP Switch.

1) RRC Reconfiguration BWP Switch: When more than one UE-specific DL/UL BWPs are configured to the UE 101 on a serving cell, the first active DL/UL BWP, if configured, indicates the DL/UL BWP to be activated upon RRC configuration (or reconfiguration) for a PCell. For SCell, configuration will be provided through RRC reconfiguration and the first active DL/UL BWP will be activated upon activation of an SCell.

2) DCI-Based BWP Switch: With initial DL/UL BWP and one or more additional DL/UL BWPs being configured to a UE, the network can schedule the UE 101 to switch the active DL/UL BWP from one configured BWP to another using BWP indicator in DCI format 1_1/0_1.

3) Timer-Based BWP Switch: The network can configure a UE 101 with a BWP inactivity timer and a default DL BWP on a serving cell. The default DL BWP is one of the DL BWPs configured to the UE 101 and becomes the active DL BWP upon expiry of the inactivity timer.

The BWP switching for a Serving Cell is used to activate an inactive BWP and deactivate an active BWP one at a time. UE 101 completes the switch of active DL and/or UL BWP within the required BWP switch delay. BWP switch delay requirements are listed in Table 3 below (e.g., based on 3GPP TS 38.133) for both DCI-based switch and timer-based BWP switch.

Table 3

| $\mu$ | NR Slot length (ms) | BWP switch delay $T_{BWPswitchDelay}$ (slots) | |
| | | Type 1[Note 1] | Type 2[Note 1] |
|---|---|---|---|
| 0 | 1 | 1 | 3 |
| 1 | 0.5 | 2 | 5 |
| 2 | 0.25 | 3 | 9 |
| 3 | 0.125 | 6 | 18 |
| Note 1: | Depends on UE capability. | | |
| Note 2: | If the BWP switch involves changing of SCS, the BWP switch delay is determined by the larger one between the SCS before BWP switch and the SCS after BWP switch. | | |

As per 3GPP TS 38.306, the following UE 101 capabilities are considered by gNB 106: bwp-DiffNumerology; bwp-SameNumerology; bwp-WithoutRestriction; bwp-SwitchingDelay; and Supported Bandwidth.

1) bwp-DiffNumerology: Indicates whether the UE 101 supports BWP adaptation up to 4 BWPs with the different numerologies, via DCI and timer. Except for SUL, the UE 101 only supports the same numerology for the active UL and DL BWP. For the UE 101 capable of this feature, the bandwidth of a UE-specific RRC configured DL BWP includes the bandwidth of the CORESET#0 (if CORESET#0 is present) and SSB for PCell and PSCell (if configured). For SCell(s), the bandwidth of the UE-specific RRC configured DL BWP includes SSB, if there is SSB on SCell(s).

2) bwp-SameNumerology: Indicates whether UE 101 supports BWP adaptation (up to 2/4 BWPs) with the same numerology, via DCI and timer. Except for SUL, the UE 101 only supports the same numerology for the active UL and DL BWP. For the UE 101 capable of this feature, the bandwidth of a UE-specific RRC configured DL BWP includes the bandwidth of the CORESET#0 (if CORESET#0 is present) and SSB for PCell and PSCell (if configured). For SCell(s), the bandwidth of the UE-specific RRC configured DL BWP includes SSB, if there is SSB on SCell(s).

3) bwp-WithoutRestriction: Indicates support of BWP operation without bandwidth restriction. The Bandwidth restriction in terms of DL BWP for PCell and PSCell means that the bandwidth of a UE-specific RRC configured DL BWP may not include the bandwidth of CORESET #0 (if configured) and SSB. For SCell(s), it means that the bandwidth of DL BWP may not include SSB.

4) bwp-SwitchingDelay: Defines whether the UE 101 supports DCI and timer based active BWP switching delay type1 or type2 (for example, as specified in clause 8.6.2 of TS 38.133).

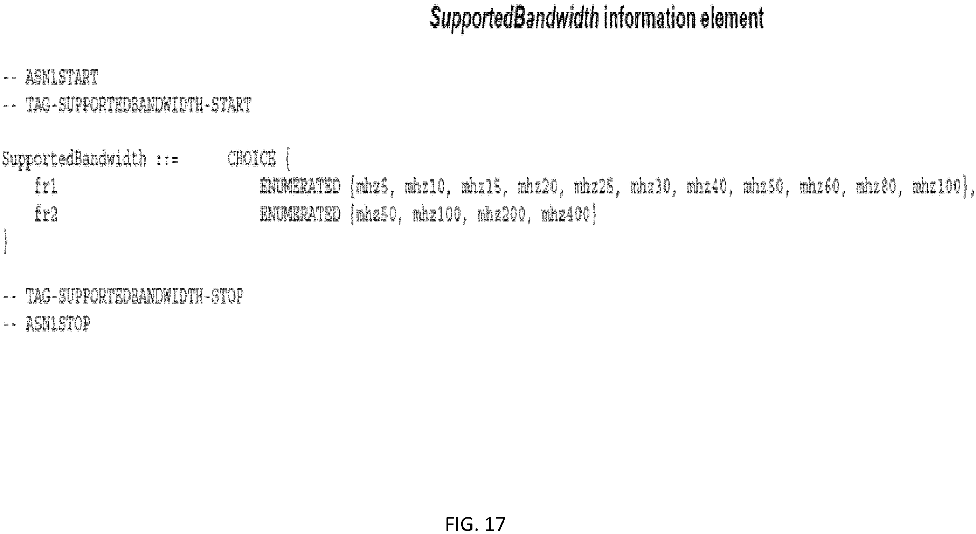

5) Supported Bandwidth: This *SupportedBandwidth* information element (IE) is used by UE 101 to indicate the maximum channel bandwidth supported by the UE 101 on one carrier of a band of a band combination. For example, if UE 101 reports SupportedBandwidth of 50 MHz for FR1, then BWPs with Bandwidth less than or equal to 50 MHz can only be configured. FIG. 17 illustrates *SupportedBandwidth* IE (as per 3GPP TS 38.331).

As explained above in discussing the BWP concept in 5G NR, the UE 101 is not required to transmit or receive any signal outside the frequency range of the active BWP. A gNB 106 configures a UE 101 with a set of BWPs and can potentially switch BWP as and when needed. When the number of UEs handled by a gNB 106 is less, BWP configuration and switching can be done by static policies, but when the number of UEs 101 handled by a gNB 106 becomes very high, static policies are not beneficial. Optimal selection of BWPs for a cell and for each UE 101 enables energy savings both at the gNB 106 and at each UE 101.

In general, BWP management is done so as to address the following aspects:

1) UE 101 and gNB 106 power saving.

2) Network automation (with respect to BWP configuration and dynamic switching).

3) Improving QoS - when wrong set of BWPs are selected, it can degrade QoS for different UEs. By selecting optimal set of BWPs, QoS of UE 101 can be improved.

4) Balancing UE 101 QoS and UE 101 power saving: Wider BWPs can improve QoS, but it may impact UE 101 power savings. Similarly, higher SCS (using SCS: 30 kHz instead of 15 KHz) can improve QoS but will increase RF-baseband power of UE.

In this section, conventional approaches for BWP management are discussed. 3GPP TR 38.864 describes two methods for BWP management to improve network energy saving in frequency domain; 1) Adaptation of bandwidth part of UE(s) within a carrier; and 2) Adaptation of bandwidth of UE(s) within a BWP. In addition, a third approach, Cell-level BWP configuration from near-RT RIC 160, can be utilized.

1) Adaptation of bandwidth part of UE(s) within a carrier: The dynamic adaptation of transmit (Tx) BW of gNB 106 radio frequency (RF) by BWP switching in a cell could achieve network energy saving. This method supports enhancements to enable UE-group-common or cell-specific BWP configuration and/or switching. The main benefit compared to other conventional BWP switch schemes is signaling overhead reduction. For SPS PDSCH reception, type-2 CG PUSCH transmission, and SP-CSI reporting on PUSCH, once BWP is switched, they should be reactivated by activation DCI. This method also supports enhancements to enable SPS PDSCH reception/Type-2 CG PUSCH transmission/SP-CSI reporting on PUSCH without reactivation after the BWP switching.

The above method (adaptation of BWP of UE(s) within a carrier) tries to achieve network energy saving by enabling UE-group-common or cell-specific BWP configuration and/or switching. This can be beneficial in some cases, but it will impact QoS performance of the UEs in that common group because different UEs can have different service requirements. Having a common BWP configuration/switching for a group of UEs will impact UE 101 energy saving because some of the UEs can be served with BWP having less bandwidth than BWP chosen by UE-common-group signaling. For example, let's assume: i) BWP (Id1, 50 MHz, SCS- 15KHz) is currently active for 10 UEs; and ii) 9 out of 10 UEs can be served with 10MHz, and 1 UE 101 has a requirement of 40 MHz. In the above method, the network may just deactivate 10 MHz and signal all the UEs to adapt to 40 MHz. This will not help in UE 101 power saving because the 9 out of 10 UEs can operate with 10MHz bandwidth, but UE 101 adapts to a 40 MHz bandwidth.

2) Adaptation of bandwidth of UE(s) within a BWP: This method supports enhancements to enable group-common signaling to adapt the bandwidth of active BWP and continue operating in same BWP. Some frequency resources within the active BWP can be deactivated. In this method, one needs to select a number of frequency resources and part of BWP resources which needs to be deactivated. All the UEs in that BWP will have to adapt the bandwidth of active BWP informed by group-common signaling. This may help in network energy saving to some extent, but this approach does not necessarily result in UE 101 power/energy saving. For one scenario given in 3GPP TR 38.864, severe throughput loss is observed along with increase in overall power consumption when operating bandwidth is reduced. This is due to reduction of maximum throughput of the UEs 101 and the resulting delay in completing the transmissions to the UEs 101. The longer activity in time domain results in power consumption which exceeds the amount of power saving from using less bandwidth (and transmit power).

3) Cell-level BWP configuration from near-RT RIC 160: E2SM-CCC specification (0-RAN.WG3.E2SM-CCC-R003-v01.01) has a provision for exposing and controlling cell-level BWP configuration for near-RT RIC 160 from E2 nodes. E2 REPORT services can be used to expose node-level and cell-level configuration information. E2 CONTROL services can be used to initiate control and/or configuration of node-level and cell-level parameters (including BWP). However, there is no provision for UE-level BWP configuration and dynamically updating the active BWP for each UE.

Accordingly, it would be advantageous to provide a system and method to achieve optimized management of BWPs in 5G networks.

SUMMARY

Accordingly, described herein are implementations of a system and method to optimize management of BWPs in 5G networks.

According to an example method, a BWP analytics module (e.g., hosted in DU 152, CU 151, RIC server, CAM server, or an analytics server) analyzes various traffic parameters, channel conditions, and BWP parameters to perform dynamic BWP management in the network.

According to an example sub-variant of Method 1 (Method 1A), one or more of the following parameters (among others) are analyzed by the BWP analytics module at the near-RT-RIC 160 server to find the optimal set of BWPs:

- DL PRB utilization per BWP and per UE 101;
- UL PRB utilization per BWP and per UE 101;
- DL/UL Packet Delay;
- Number of DL packets (RLC SDUs) input to DU from CU-UP per UE;
- Number of UL packets input to DU 152 from each UE 101 supported by that DU 152;
- UE 101 Throughput;
- Interference levels of PRBs;
- Number of active users per cell;
- UE 101 capabilities;
- Channel condition measures for UEs 101 in each cell (supported by that DU 152);
- Statistics related to QoS performance of different DRBs from the DU 152 such as waiting time in RLC queues along with 5QI of that DRB, throughput violations for GBR (Guaranteed Bit Rate) DRBs and packet error rate; and
- BWP information for each cell i.e., BWP configuration, UEs 101 in each BWP and the like.

According to an example sub-variant of Method 1 (Method 1B), one or more of the following parameters (among others) are analyzed by the BWP analytics module at the at the gNB-DU 152 to find the optimal set of BWPs:

- UL PRB utilization per BWP and per UE 101;
- DL PRB utilization per BWP and per UE 101;
- DL/UL Packet Delay;
- Number of DL packets (RLC SDUs) input to DU from CU-UP per UE 101;
- Number of UL packets input to DU from each UE 101 supported by that DU 101;
- UE 101 Throughput;

- Interference levels of PRBs;
- Number of active users per cell;
- UE 101 capabilities;
- Channel condition measures for UEs in each cell (supported by that DU 152);
- Statistics related to QoS performance of different DRBs from the DU 152 such as waiting time in RLC queues along with 5QI of that DRB, throughput violations for GBR (Guaranteed Bit Rate) DRBs and packet error rate; and
- BWP information for each cell i.e., BWP configuration, UEs 101 in each BWP and the like.

According to an example sub-variant of Method 2 (Method 2A), the BWP analytics module (e.g., at near-RT RIC 160 or gNB-DU 152) can i) periodically analyze, for example, PRB utilization difference, delay violation percentage, throughput performance, and/or interference levels of each BWP to classify each BWP, and ii) periodically analyze, for example, PRB utilization, throughput, and/or delay requirements of each UE 101 into one of several classifications.

According to an example sub-variant of Method 2 (method 2B), the BWP analytics module will dynamically select BWPs per a given cell and the active BWP of a UE 101 in the given cell based on UE 101 performance in its current active BWP.

According to an example sub-variant of Method 2 (method 2C), the BWP analytics module will address a sub-optimal BWP performance scenario by selectively offloading the UEs 101 in each BWP to other BWPs, as needed, that is, providing optimization at cell-level (gNB 106 level) by distributing UEs across BWPs in the cell.

DESCRIPTION OF THE DRAWINGS

FIG. 1 is a block diagram illustrating the user plane stack of 5G NR.

FIG. 2 is a block diagram illustrating the user plane protocol stacks for a PDU session of 5G NR.

FIG. 3 is a block diagram illustrating the control plane stack of 5G NR.

FIG. 4 is a block diagram illustrating NG-RAN architecture.

FIG. 5A is a block diagram illustrating separation of CU-CP and CU-UP in an 5G NG-RAN architecture.

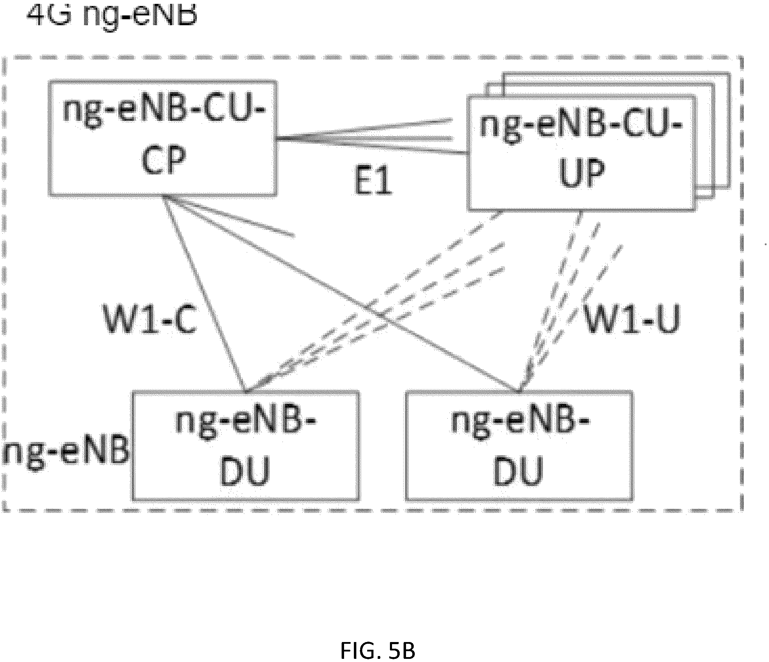

FIG. 5B is a block diagram illustrating separation of CU-CP and CU-UP in a 4G NG-RAN architecture.

FIG. 6 is a block diagram illustrating DL L2 structure.

FIG. 7 is a block diagram illustrating UL L2 structure.

FIG. 8 is a block diagram illustrating L2 data flow example.

FIG. 9 illustrates an overview of 0-RAN architecture.

FIG. 10 illustrates an example PDU session having multiple DRBs.

FIG. 11 illustrates multiple PDU sessions involving multiple DRBs and QoS Flow Identifiers (QFIs).

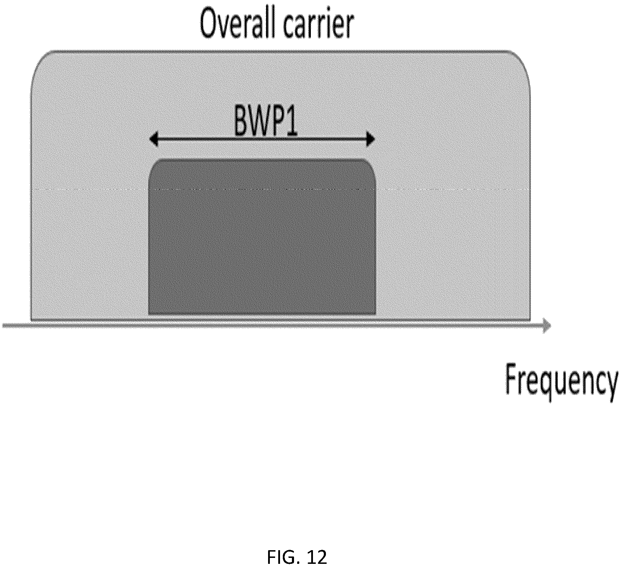

FIG. 12 illustrates an example BWP allocation in which BWP1 supports reduced UE 101 bandwidth.

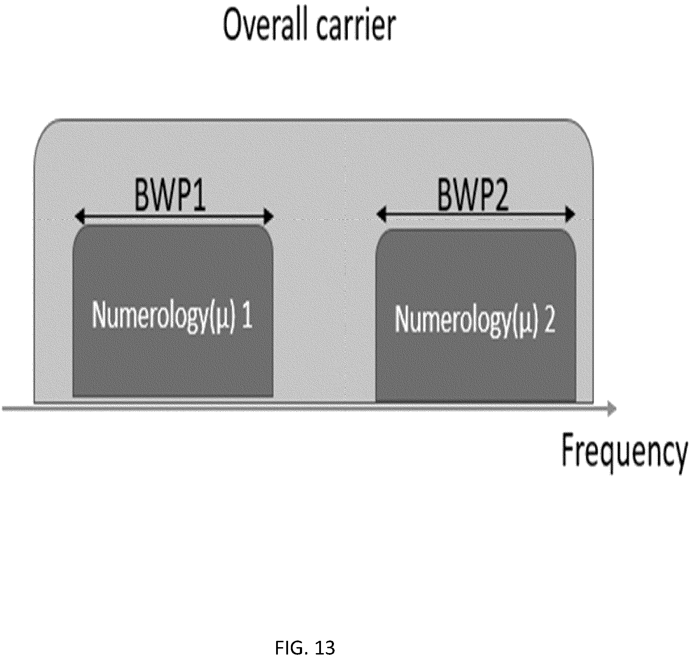

FIG. 13 illustrates an example BWP allocation in which BWP1 and BWP2 support mixed numerology (from gNB 106 perspective).

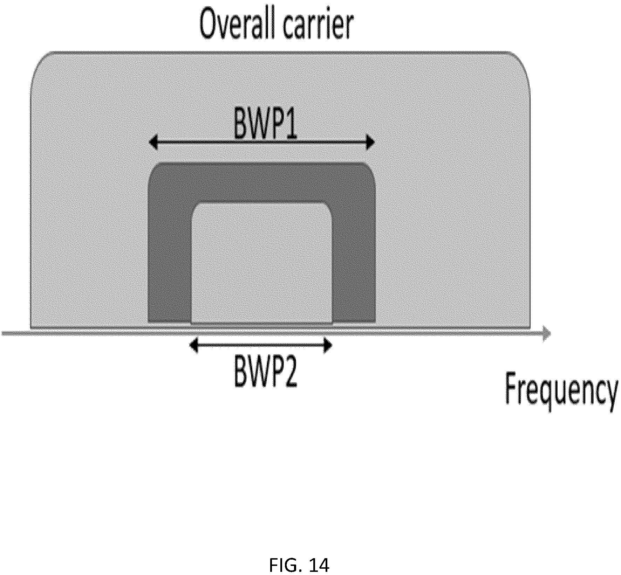

FIG. 14 illustrates an example BWP allocation in which BWP1 and BWP2 support reduced UE 101 energy consumption.

FIG. 15 illustrates an example of how UE 101 performs synchronization and the RACH access with initial DL (or UL) BWP, followed by BWP adaptation.

FIG. 16 illustrates an example call flow (e.g., as per 3GPP TS 38.473 and 38.331) for configuration of DL and UL BWP parameters.

FIG. 17 illustrates *SupportedBandwidth* IE, as per 3GPP TS 38.331.

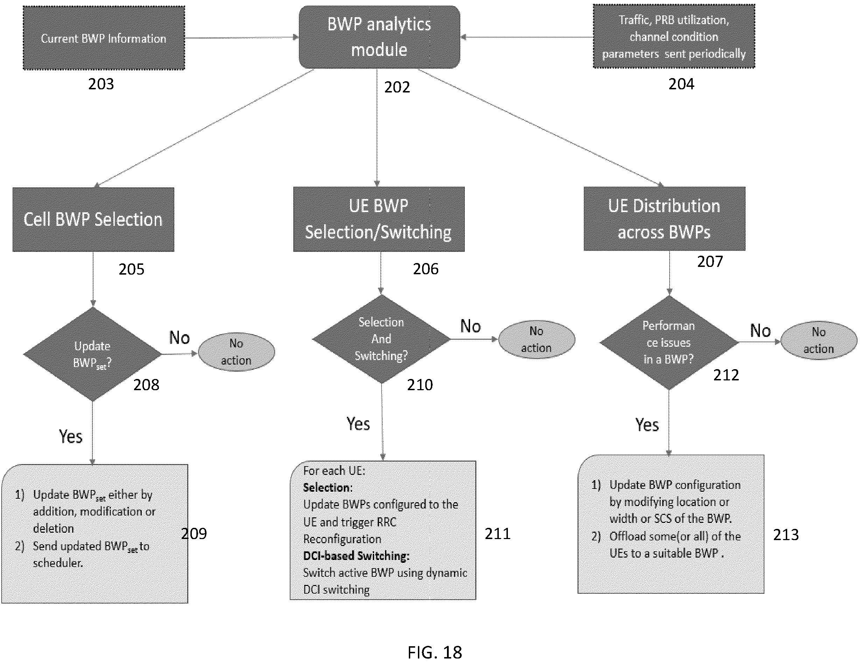

FIG. 18 illustrates an overview of various example methods for optimized management of BWPs.

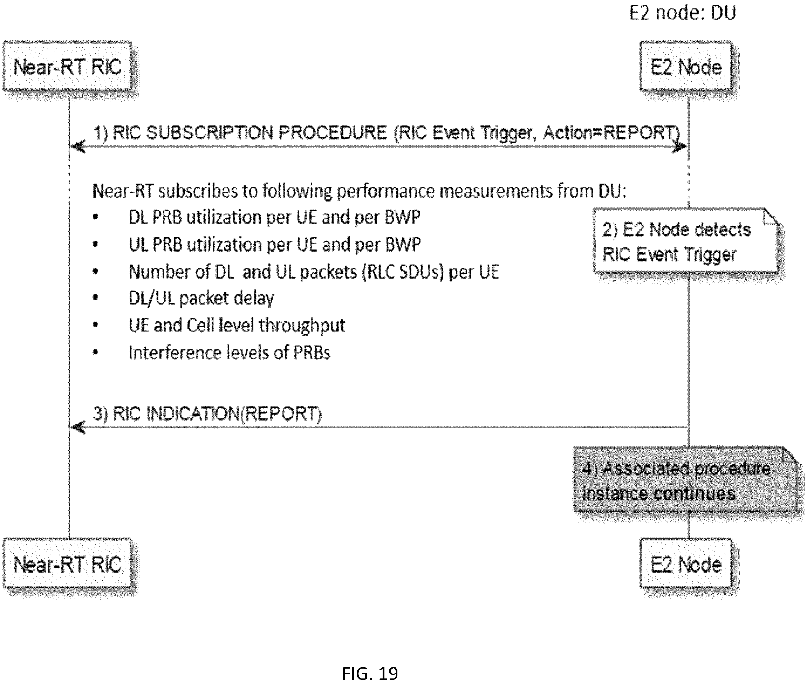

FIG. 19 illustrates a near-RT RIC 160 subscribing to various performance measurements from the DU in Method 1A.

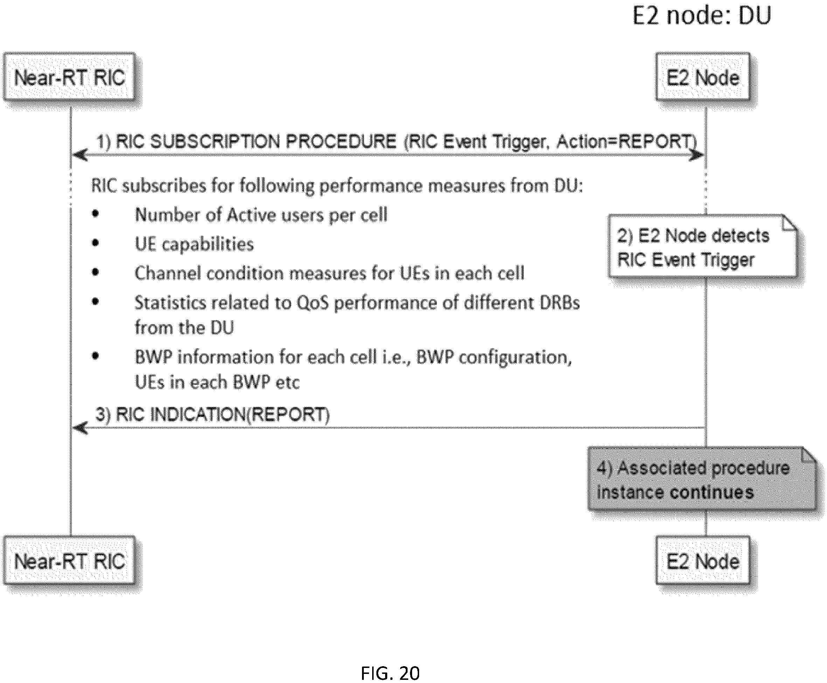

FIG. 20 illustrates a near-RT RIC 160 subscribing to various information from DU using E2SM-RC in Method 1A.

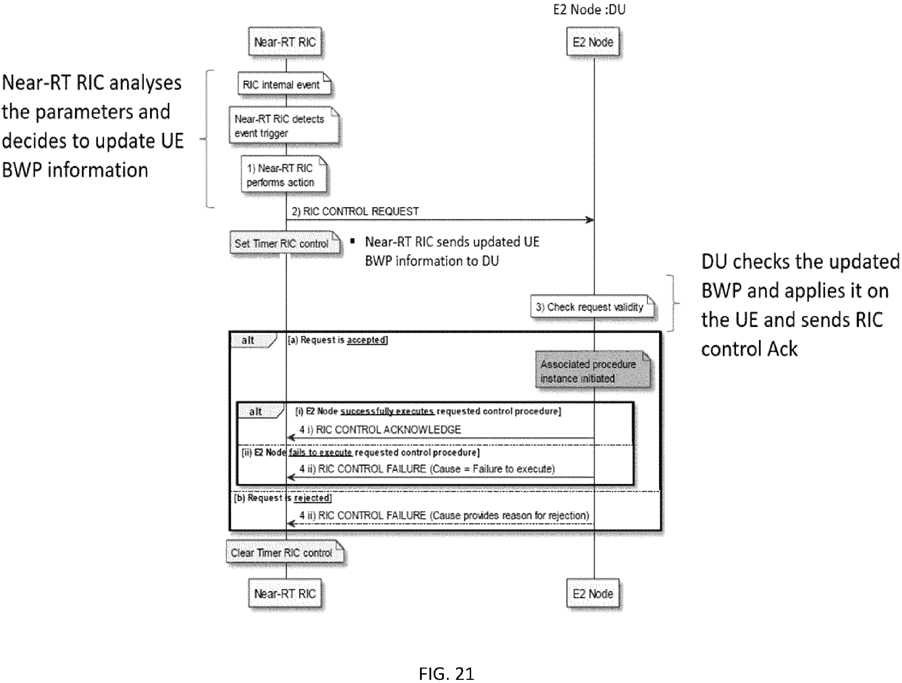

FIG. 21 illustrates a near-RT-RIC analyzing various parameters to select and configure BWP per UE 101 in a cell at the DU.

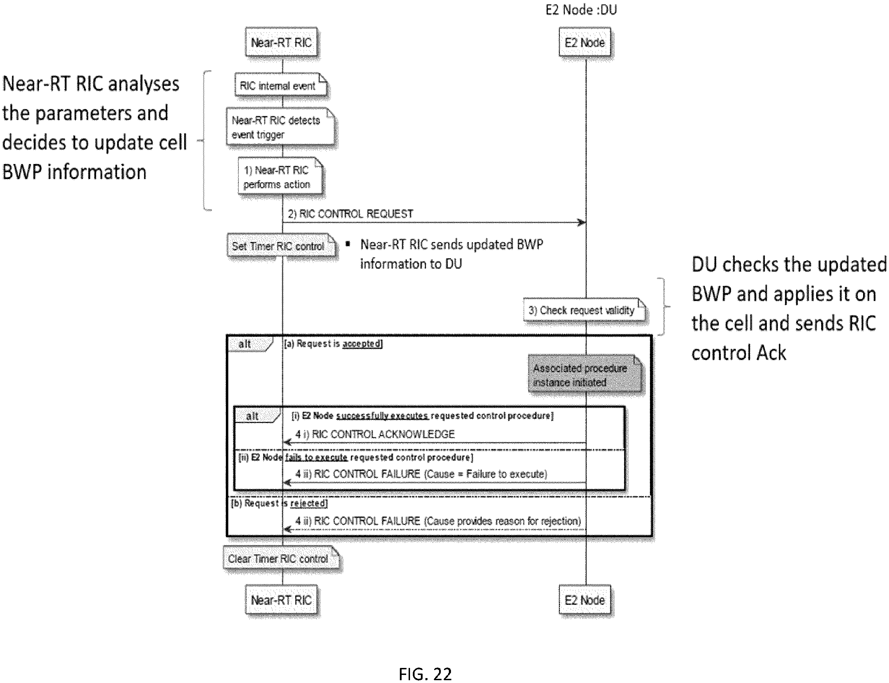

FIG. 22 illustrates a near-RT-RIC analyzing various parameters and taking action to configure BWP information per cell at the DU.

DETAILED DESCRIPTION

For this application the following terms and definitions shall apply:

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

The above-described and other features and advantages of the present disclosure will be appreciated and understood by those skilled in the art from the following detailed description, drawings, and appended claims.

In example embodiments of the systems and methods according to the present disclosure, BWP analytics module analyzes various traffic parameters, channel conditions, and BWP parameters to implement dynamic BWP management in the network. The BWP analytics module can be hosted, e.g., in gNB 106 (DU 152 or CU 151), at an RIC server, or as a separate CAM or analytics server. For the following description, assume $BWP_{set}(t) = \{BWP_0, BWP_1 \ldots, BWP_m\}$, where $BWP_i$, $i = 0, 1, 2 \ldots, m$, are the BWPs configured per cell at gNB-DU 152 at a given point of time. For example, an initial BWP can be denoted as $BWP_0$, and one other BWP, e.g., $BWP_1$, can act as an active BWP for UEs in DL and UL.

FIG. 18 illustrates an overview of various example methods for optimized management of BWPs, which example methods are discussed in further detail below. As shown in FIG. 18, the BWP analytics module 202 receives i) current BWP information 203, and ii) traffic, PRB utilization, and channel condition parameters 204 sent periodically. The BWP analytics module 202 analyses these received information and performs i) cell BWP selection 205, ii) UE 101 BWP selection and/or switching (referenced as selection/switching) 206, and/or iii) UE 101 distribution across BWPs 207. For cell BWP selection, if at block 208 the condition for updating $BWP_{set}$ is met, then at block 209 1) the $BWP_{set}$ is updated by addition, modification or deletion, and 2) the updated $BWP_{set}$ is sent to the scheduler. For UE 101 BWP selection/switching, if at block 210 the condition for selection/switching is met, then at block 211 for each UE, 1) BWPs configured to the UE 101 are updated, and RRC reconfiguration is triggered, and 2) active BWP is switched using dynamic DCI switching. For UE 101 distribution across BWPs, if at block 212 a performance issue in a BWP is determined, then at block 213 1) BWP configuration is updated by modifying the location, width, or SCS of the BWP, and 2) some or all of the UEs are offloaded to a suitable BWP. In FIG. 18, note that although "Cell BWP Selection" and "UE BWP Selection/Switching" blocks are shown as separate logical steps, these blocks work together.

In an example embodiment of the method ("Method 1") according to the present disclosure, the BWP analytics module can be located at either non-real-time (non-RT) RIC 161 or near-real-time (near-RT) RIC 160. Depending on the use case, a network operator can decide to use non-RT 161 or near-RT RIC 160. For the non-RT RIC 161 case, various performance parameters are communicated from gNB 106 to non-RT RIC 161 for analysis (e.g., as described below in connection with Method 2) and decisions are communicated to gNB 106 via the 01 interface.

In a first sub-variant of example Method 1 (Method 1A), a near-RT RIC 160 subscribes to the following performance measurements from the DU, as illustrated in FIG. 19:

- DL PRB utilization per BWP and per UE;
- UL PRB utilization per BWP and per UE;
- DL/UL Packet Delay;
- Number of DL packets (RLC SDUs) input to DU 152 from CU-UP per UE 101;
- Number of UL packets input to DU from each UE 101 supported by that DU;
- UE 101 Throughput; and
- Interference levels of PRBs.

E2 Service Model: Key Performance Measurement (E2SM-KPM) service, which supports UE-level performance measurements, can be enhanced to support performance measurements per BWP. In addition to the above, Near-RT RIC 160 subscribes to the following information from DU 152 using E2 Service Model: RAN Control (E2SM-RC), as illustrated in FIG. 20:

- Number of active users per cell;

- UE 101 capabilities;

- Channel condition measures for UEs 101 in each cell (supported by that DU 152);

- Statistics related to QoS performance of different DRBs from the DU such as waiting time in RLC queues along with 5QI of that DRB, throughput violations for GBR (Guaranteed Bit Rate) DRBs and packet error rate; and

- BWP information for each cell i.e., BWP configuration, UEs in each BWP and the like.

E2 SM-RC service, which supports reporting cell-level and UE-level information from E2 node to near-RT RIC 160, is enhanced to support cell and UE 101 level BWP information.

The above-listed performance measurement parameters are measured or computed every measurement interval T, and communicated from the DU 152 to the near-RT-RIC 160 server. Alternatively, these parameters could be communicated to the near-RT-RIC 160 server based on some specified events. Along with the above parameters, current BWP information of the cell and BWP configured for each UE 101 are communicated to the near-RT-RIC 160 server, and these parameters are analyzed at the near-RT-RIC 160 server for the BWP analytics module to determine the optimal set of BWPs. For finding the optimal set, the near-RT-RIC 160 server estimates the thresholds (e.g., as explained in connection with Method 2A below) for the performance measurements based on current BWP information and channel conditions. When the reported performance measurements exceed these threshold values, the BWP analytics module can perform various optimizations. After this, the near-RT-RIC 160 sends the updated BWP setto DU using E2 Control service. FIG. 21 illustrates the near-RT-RIC 160 analysing various parameters to select and configure BWP per UE 101 in a cell at the DU 152. FIG. 22 illustrates the near-RT-RIC 160 analysing various parameters and taking action to configure BWP information per cell at the DU 152.

In a second sub-variant of example Method 1 (Method 1B), the BWP analytics module hosted at the gNB-DU 152 analyzes the following performance measurements and BWP information already present at DU 152 to perform BWP management:

A) Performance measurements:

1) UL PRB utilization per BWP and per UE 101;

2) DL PRB utilization per BWP and per UE 101;

3) DL/UL Packet Delay;

4) Number of DL packets (RLC SDUs) input to DU 152 from CU-UP per UE 101;

5) Number of UL packets input to DU from each UE 101 supported by that DU 101;

6) UE 101 Throughput; and

7) Interference levels of PRBs.

B) UE 101 and cell-level information:

1) Number of active users per cell;

2) UE 101 capabilities;

3) Channel condition measures for UEs 101 in each cell (supported by that DU 152);

4) Statistics related to QoS performance of different DRBs from the DU such as waiting time in RLC queues along with 5QI of that DRB, throughput violations for GBR (Guaranteed Bit Rate) DRBs and packet error rate; and

5) BWP information for each cell i.e., BWP configuration, UEs in each BWP and the like.

In a second example embodiment of the method ("Method 2") accordingto the present disclosure, the BWP analytics module performs BWP analytics to categorize the BWPS. According to a first sub-variant of Method 2 (Method 2A), BWP data analysis and classification for gNB 106 UE 101 are provided. BWP's physical characteristics, for example, frequency location, bandwidth, and SCS can be dynamically configured. The number of BWPs per cell and active BWP of each UE 101 are updated dynamically to enable optimal performance for the network and UE 101. The BWP analytics module, e.g., hosted at the near-RT RIC 160 or at the gNB-DU 152, analyzes the performance measurements and the BWP information received, and the BWP analytics module estimates BWP and UE-level thresholds. These thresholds are used to optimally select an active BWP for the UE 101. The BWP analytics module periodically analyzes, for example, every n milliseconds (e.g., n= 100 ms), the PRB utilization, delay violation, throughput performance, and/or interference levels of each BWP. The BWP analytics module categorizes the BWPs based on the values of these parameter factors (e.g., BWP PRB utilization factor).

In this section, BWP classification (from gNB 106 point of view) is described.

1) PRB utilization difference: In the present disclosure, "PRB utilization difference" is defined to be (PRB utilization percentage of a BWP) - (average of the PRB utilization percentage across BWPs). If PRB utilization difference of a BWP is greater than a specified BWP PRB utilization factor, then that BWP is considered overloaded; otherwise, the BWP is considered underloaded. As an example, assume PRB utilization percentages are BWP1: 90%, BWP2: 80%, BWP3: 40%, and BWP4: 50%, which means the average of PRB utilization across BWPs = 65 %, and let's assume BWP PRB utilization factor = 20 %. In this scenario, BWP1 is considered as overloaded because PRB utilization of BWP1 (90%) exceeds the average of 65% by more than 20%.

2) Delay violation percentage: This percentage refers to the percentage of logical channels that are not able to meet the delay requirements for their QoS profiles. BWP Delay violation percentage difference is defined as: (Delay violation percentage of a BWP) - (Average of the delay violation percentage across BWPs). If the delay violation percentage difference of a BWP is greater than a specified delay violation factor, then that BWP is considered congested; otherwise, the BWP is considered uncongested.

3) Normalized throughput of BWPk: This quantity refers to the ratio of (throughput in the $BWP_k$)/(the peak throughput possible in the $BWP_k$). Normalized throughput difference is defined as: (average normalized throughput) - (normalized throughput of BWP). If normalized throughput difference is greater than a specified throughput factor, then that BWP is considered as congested; otherwise, the BWP is considered uncongested.

4) Average interference of the BWP: This quantity refers to (sum of interference of PRBs in BWP)/(Number of PRBs in the BWP). BWP PRB interference percentage refers to the percentage of PRBs in a BWP having interference greater than average interference of that BWP. If BWP PRB interference percentage is greater than a specified interference factor, then that BWP is considered as a candidate for modification.

In this section, classification of UE 101 by considering its current active BWPs is described. BWP analytics module periodically analyzes, for example, every n milliseconds (for example, n = 100 ms), PRB utilization, throughput, and delay requirements of each UE 101 and classify the UEs into following classes:

1) Resource-balanced: UE 101 is able to get resources in its current active BWP and throughput, delay requirements of UE 101 are satisfactory.

2) Resource-light: UEs throughput, delay requirements are satisfactory, but PRB usage of UE 101 is low i.e., UE 101 can be switched to a BWP with less bandwidth which help in UE 101 energy saving.

3) Resource-intensive: UE 101 is not getting enough resources in its current active BWP and its throughput, delay requirements of UE 101 are not satisfactory.

4) Resource-delay intensive: UE 101 is able to get resources in its current active BWP and throughput requirement is met, but delay requirements are not met. UE 101 needs to be switched BWP with higher SCS.

In addition, for each interval of n ms, e.g., n = 100 ms, BWP analytics module analyzes the performance measurements and classify UEs 101 as follows:

i) If UE 101 PRB utilization is less than 'x' percentage for 't' consecutive time intervals, then it is determined: Low PRB usage = yes (1); else, Low PRB usage = no (0).

ii) If UE 101 throughput is low for 't' consecutive time intervals, then it is determined: Low throughput = yes (1); else Low throughput = no (0).

iii) If one or more UE 101 QoS flow does not meet delay requirements for 't' consecutive time intervals, then it is determined: High delay = yes (1); else High delay = no (0).

The above-described classifications are summarized in Table 4 below.

Table 4

| Low PRB usage | Low throughput | High delay | UE BWP class |
|---|---|---|---|
| 0 | 0 | 0 | Resource -balanced |
| 0 | 0 | 1 | Resource -delay intensive |
| 0 | 1 | 0 | Resource -intensive |
| 0 | 1 | 1 | Resource -delay intensive |
| 1 | 0 | 0 | Resource - light |
| 1 | 0 | 1 | Resource -intensive |
| 1 | 1 | 0 | Resource -intensive |
| 1 | 1 | 1 | Resource -intensive |

The thresholds for PRB utilization, throughput, and delay requirements to determine UE 101 BWP class can be optimized in an iterative approach, for example, using BWP switching failure counters, as explained below.

BWP switching failure counters, which are counters provided in the present disclosure to help manage BWP performance in the cellular system, include the following:

1) BWP_switch_Too_early:

a) UE 101 is switched from a BWP with less resources to a BWP with more resources and PRB utilization of UE 101 is very low in this new BWP or UE 101 is classified as "Resource-light" for consecutive time intervals.

b) UE 101 is switched from a BWP with more resources to a BWP with less resources and PRB utilization of UE 101 is very high in this new BWP or UE 101 is classified as "Resource-intensive" for consecutive intervals.

In the above cases, BWP switch is considered as too early and the counter *BWP_switch_Tooearly* is incremented.

2) BWP_switch_Too_late: UE 101 is classified as resource-intensive or resource-delay intensive for t1 consecutive time intervals (t1 > t) and BWP of the UE 101 is not switched. If BWP switch is performed after t1 intervals, then it is considered as too late and *BWP_switch_Too_late* counter is incremented.

3) BWP_switch_To_wrong_BWP: Once BWP is switched and in the new BWP if the UE 101 is not classified as "resource-balanced" for t2 consecutive time intervals, then it is considered as switch to wrong BWP and *BWP_switch_To_wrongBWP* is incremented.

According to a second sub-variant of Method 2 (Method 2B), dynamic selection of BWPs per cell and BWPs per UE 101 in the DU 152 are provided. Assume $BWP_{set}$ (t) = {$BWP_0$, $BWP_1$..., $BWP_m$}, where $BWP_i$, i= 0,1, 2..., m are the BWPs configured at a given point of time per cell at gNB-DU 152. The initial BWP can be used as default BWP or $BWP_{set}$ can contain a BWP (e.g., with small bandwidth) which can be configured as default BWP. A UE 101 can be configured with up to 4 downlink BWPs per carrier (cell) and up to 4 uplink BWPs per carrier. A gNB-DU 152 selects up to or at most 4 BWPs from $BWP_{set}$ for each UE. For initial selection and configuration, one of the BWPs is selected such that the BWP in $BWP_{set}$ having a bandwidth equal to the maximum channel bandwidth supported by the UE 101 (provided the maximum channel bandwidth supported by UE 101 is less than the actual channel bandwidth). If UE's maximum supported bandwidth is greater than the actual channel bandwidth, then a BWP with maximum bandwidth in $BWP_{set}$ will be selected.

Method 2B provides dynamically selecting BWPs per cell and the active BWP of a UE 101 in that cell based on UE 101 performance in its current active BWP. Based on the BWP and UE 101 classification methods mentioned in Method 2A, every n * t second and for each BWP, the BWP analytics module will check the number of UEs 101 per each BWP class to implement the following actions:

1) Resource-intensive UEs: If Resource-intensive UEs are more than *maxResourceIntensiveUEs* percentage (which is a configurable threshold for maximum resource-intensive UEs), then a) BWP analytics module will increase number of RBs in BWP, if possible, or b) BWP analytics module will create a new BWP and transfer some and/or all of the resource intensive UEs to the new BWP. Otherwise, some and/or all of the resource-intensive UEs are moved from this BWP to an underloaded BWP.

2) Resource-delay-intensive UEs: If Resource-delay-intensive UEs are more than *maxResourceDelayIntensiveUEs* percentage (which is a configurable threshold for maximum resource-delay-intensive UEs), then a) BWP analytics module will use higher SCS for this BWP, if possible, or b) BWP analytics module will create a new BWP with higher SCS and transfer some and/or all of the resource-delay-intensive UEs to the new BWP. Otherwise, some and/or all of the resource-delay-intensive UEs are moved to a BWP which has higher SCS and is less congested.

3) Resource-light UEs: If resource-light UEs 101 are more than *maxResourceLightUEs* percentage (which is a configurable threshold for maximum resource-light UEs), then a) BWP analytics module will reduce the number of RBs in the BWP, or b) create a new BWP as subset of the current BWP and move the UEs to the new BWP (e.g., if current BWP is BWP1 with the number of RBs = 100 (e.g., CRB1 to CRB 100), create a new BWP (e.g., BWP2) as subset of BWP1, where BWP2 has a number of RBs = 40 (e.g., CRB20 to CRB60). Otherwise, the BWP analytics module will switch BWP of these UEs to a BWP which has a lower number of RBs and is underloaded. Note that if most (e.g., 90%) of the UEs in a given BWP are switched to a different BWP, the remaining UEs can also be switched, and the BWP can be deleted to achieve network energy savings.

Based on the percentage of UEs in each class in each BWP and actions specified for each class, the BWP analytics module can execute the following steps every n * t second as needed:

i) Adding a new BWP to $BWP_{set}$ or modify configuration of the existing BWP in the $BWP_{set}$, and/or deleting a BWP from $BWP_{set}$ in some cases.

ii) Performing BWP adaptation, i.e., switching the active BWP of the UE 101 according to the actions specified in the class it belongs to. If the selected new BWP is not configured, gNB 106 will send RRC reconfiguration to configure the BWP before switching.

iii) If a UE 101 is classified as Resource Balanced, the UE 101 will continue in its current active BWP.

When UE 101 is configured with Configured grant or SPS resources in the current active BWP, the BWP analytics module ensures that the new active BWP selected has enough resources to support configured grant or SPS. If none of the other BWPs has enough resources for configured grant or SPS, the UE's active BWP should not be switched.

Some examples showing actions taken by BWP analytics module running at near-RT RIC 160 or gNB-DU 152 are given below:

A) Example I: Assume that $BWP_{set}$ is supporting following bandwidths: {15 MHz, 25 MHz, 30 MHz, 50 MHz, 60 MHz}.

After analyzing various performance measures communicated from each UE, the BWP analytics module finds that a set of UEs in BWP Id 3 (e.g., BWP Id3, Width = 60 MHz, SCS = 15 KHz) are classified as resource light and it is estimated that these UEs can be served with BWP of 40 MHz BW. The BWP analytics module decides to add a new BWP entry in $BWP_{set}$ with a bandwidth of 40 MHz (if this is not already part of the $BWP_{set}$). After that, this new BWP can be configured for these UEs, and the UEs will be switched to this new BWP.

B) Example II: A UE 101 with 5QI2 (packet delay budget: 200ms) is configured with BWP Id 1 (e.g., BWP Id1, Width = 50MHz, SCS = 15KHz) and this UE 101 is experiencing overall delay of 220ms, but it is getting good throughput. The UE 101 is classified as resource-delay-intensive. In this case, the BWP analytics module decides to add a new BWP, e.g., BWP Id6 (with width = 50MHz, SCS = 30KHz) with higher SCS, and this BWP Id6 is configured for that UE. Alternatively, the BWP analytics module modifies the existing BWP Id1 (i.e., BWP Id1, Width = 50MHz, SCS modified to 30KHz), and the updated configuration needs to be sent to all the UEs configured with this BWP.

According to a third sub-variant of Method 2 (Method 2C), distribution of UEs across BWPs is provided. In an example scenario, each cell in gNB-DU 152 has multiple BWPs, and each BWP has multiple active UEs. In this scenario, BWP performance is not good due to following reasons: 1) sometimes UEs 101 in a particular BWP can experience less throughput (or high latency) due to bad channel conditions in that BWP, i.e., BWP is congested; 2) BWP can be overloaded with UEs 101 more than it can serve; and 3) interference levels of PRBs in a BWP are very high, which will reduce the overall throughput of the BWP. Method 2C provides a solution to address the above problems by using the BWP classification mentioned in Method 2A and optimizing BWP's performance by offloading the UEs 101 in each BWP to other BWPs as needed.

Assume $BWP_{set}$ = {$BWP_0$, $BWP_1$..., $BWP_m$} where $BWP_i$, i= 0,1, 2..., m are the BWPs configured per cell atgNB-DU 152. As mentioned in connection with Method 2A, BWPs is classified as overloaded/underloaded, congested/uncongested, and the like. The BWP analytics module can offload UEs in one BWP to other appropriate BWPs (based on UE 101 capabilities) whenever needed. Some example cases are described below.

Example I: A first BWP (BWP Id1, Width = 20MHz, SCS = 15KHz) has 10 UEs. A second BWP (BWP Id2, Width = 30MHz, SCS = 15KHz) has 5 UEs. Assume that BWP Id1 is classified as overloaded for consecutive time intervals, in which case the BWP analytics module will offload some of the UEs from this BWP Id1 to another appropriate BWP (e.g., BWP Id2 in this case).

Example II: In another example, UEs in a BWP (BWP Id1, Width = 20MHz, SCS = 15KHz) are experiencing high packet delay, i.e., BWP is classified as congested. In this case, the BWP analytics module can offload some of the UEs to different BWP with higher SCS.

Example III: If interference levels in a BWP are above a certain threshold (e.g., as described in connection with Method 2A), the BWP analytics module modifies the BWP configuration of the BWP, either by shifting the location of BWP (i.e., start RB) or by reducing the BWP width (that is, number of RBs). The BWP analytics module can even offload some of the UEs in this BWP to another suitable BWP to avoid scheduling UEs 101 with PRBs having high interference.

By distributing UEs 101 across BWPs periodically, the overall performance of the cell can be improved. If PRB utilization and/or the number of active UEs 101 are low across BWPs in the cell, BWP analytics module can move all the UEs 101 (based on QoS requirements) gradually to a single BWP having sufficient bandwidth. This enables the network to save energy/power by operating in narrow bandwidth (compared to cell bandwidth) and handling a smaller number of BWPs (scheduling complexity decreases).

In short, Method 2B performs optimizations at BWP-level by optimizing BWP configuration and switching decisions based on UE 101 performance. Method 2C performs optimization at cell-level (gNB 106 level) by distributing UEs across BWPs in the cell. These proposed methods consider PRB utilization, throughput, packet delay/latency, and so on, in addition to having cell and UE-level context (current BWP configuration and UE 101 capabilities), to perform BWP management in an improved way. In the above-described methods, one of the criteria for selection of the UEs 101 that need to be offloaded can be *bwp-SwitchingDelay* capability of the UEs, type1 UEs 101 can be preferred for offloading, as their BWP Switching delay will be less.

In addition to above, the following should be noted for energy saving of gNodeB and UE 101 in connection with the above-described methods. The disclosed methods optimize BWP configuration and dynamic switching to address network as well as UE 101 energy savings. At the same time, the disclosed methods also consider QoS aspects of different applications.

For power saving in connection with UE 101, the following can be implemented:

1) If UE 101 can be served with data transmission in a narrow bandwidth (compared to cell bandwidth), baseband processing of UE 101 can be reduced. For example, in FR1, a maximum of 100MHz channel bandwidth can be used in n78 band, and in FR2, maximum channel bandwidth of 400 MHz can be used in n257 band, but UE 101 may not need to use such large channel bandwidth.

2) During data transmission, if UEs can be served in narrow bandwidth, hardware and software systems of the UE 101 can reduce the clock rate of some processors or turn off certain power zones to save power at UE.

3) In 5G NR, multiple numerologies are supported, and RF-baseband processing operates with lower sampling rate for certain numerologies. By selecting the appropriate numerology, RF-baseband processing power can be reduced.

For power saving in connection with gNB 106, the gNB 106 can potentially shut down (or lower frequency of) some of its cores if BWP selection and management is done efficiently (e.g., when we can handle all UEs with suitable BWPs in x MHz where spectrum is for y MHz (with x < y)).

While the present disclosure has been described with reference to one or more exemplary embodiments, it will be understood by those skilled in the art that various changes may be made and equivalents may be substituted for elements thereof without departing from the scope of the present disclosure. For example, although the example methods have been described in the context of 5G cellular networks, the example methods are equally applicable for 6G and other similar wireless networks in which BWP concept is applicable. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

For the sake of completeness, a list of abbreviations used in the present specification is provided below:

3GPP: 3rd Generation Partnership Project
5GC: 5G Core Network
5G NR: 5G New Radio
5QI: 5G QoS Identifier
ACK: Acknowledgement
AM: Acknowledged Mode
APN: Access Point Name
ARP: Allocation and Retention Priority
BS: Base Station
BWP: Bandwidth Part
CG: Configured Grant
CP: Control Plane
CQI: Channel Quality Indicator
CSI-RS: Channel State Information Reference Signal
CU: Centralized Unit
CU-CP: Centralized Unit- Control Plane
CU-UP: Centralized Unit - User Plane
DL: Downlink
DDDS: DL Data Delivery Status
DDR: Desired Data Rate
DNN: Data Network Name
DRB: Data Radio Bearer
DU: Distributed Unit
eNB: evolved NodeB
EPC: Evolved Packet Core
GBR: Guaranteed Bit Rate
gNB: gNodeB
GTP-U: GPRS Tunneling Protocol - User Plane
IP: Internet Protocol
L1: Layer 1
L2: Layer 2
L3: Layer 3
LC: Logical Channel
MAC: Medium Access Control
MCS: Modulation and Coding Scheme
NACK: Negative Acknowledgement
NAS: Non-Access Stratum
NR-U: New Radio - User Plane
O-RAN: Open Radio Access Network

PDB: Packet Delay Budget
PDCCH: Physical Downlink Control Channel
PDCP : Packet Data Convergence Protocol
PDSCH: Physical Downlink Shared Channel
PDU: Protocol Data Unit
PHY: Physical Layer
PRB: Physical Resource Block
QCI: QoS Class Identifier
QoS : Quality of Service
QFI: QoS Flow Identifier
RAT: Radio Access Technology
RDI: Reflective QoS Flow to DRB Indication
RLC: Radio Link Control
RLC-AM: RLC Acknowledged Mode
RLC-UM: RLC Unacknowledged Mode
RQI: Reflective QoS Indication
RRC: Radio Resource Control
RRM: Radio Resource Management
RTP: Real-Time Transport Protocol
RTCP: Real-Time Transport Control Protocol
RU: Radio Unit
SCS: Sub-carrier spacing
SCTP: Stream Control Transmission Protocol
SDAP: Service Data Adaptation Protocol
SPS: Semi-Persistent Scheduling
SP-CSI: Semi-Persistent Channel State Information TB: Transport Block
TCP: Transmission Control Protocol
TEID: Tunnel Endpoint Identifier
UE: User Equipment
UP: User Plane
UL: Uplink
UM: Unacknowledged Mode
UPF: User Plane Function

**Claims**

1. A method for optimizing bandwidth part (BWP) management for 5G wireless network, comprising:

   periodically analyzing, by a BWP analytics module located at one of near-real-time radio access network intelligent controller (near-RT RIC) or a distributed unit (DU) of a gNodeB (gNB), BWP peformance mesasures for at least one of a physical resource block (PRB) utilization difference, a delay violation percentage corresponding to a percentage of logical channels not able to meet delay requirements for quality of service (QoS) profile assigned to the logical channels, a throughput, and interference levels of a BWP to classify the BWP;
   periodically analyzing, by the BWP analytics module, at least one of PRB utilization, throughput, and delay requirements of at least one user equipipment (UE); and
   categorizing, by the BWP analytics module, the at least one UE into one of a plurality of BWP classifications based on the analyzing of the at least one of PRB utilization, throughput, and delay requirements.

2. The method of claim 1, further comprising:
   analyzing, by the BWP analytics module, the number of UEs per each one of the plurality of BWP classification to implement one of a plurality of BWP management actions, wherein the BWP classifications for the UEs include: resource-intensive UEs; resource-delay-intensive UEs; and resource-light UEs. wherein:

   in the case the number of resource-intensive UEs exceeds a specified threshold for maximum resource-intensive UEs, one of i) increasing the number of resource blocks (RBs) in the BWP, ii) transferring at least some of the resource-intensive UEs from the BWP to another BWP that is underloaded, or iii) creating a new BWP and transferring at least some of the resource-intensive UEs to the new BWP;

in the case the number of resource-delay-intensive UEs exceeds a specified threshold for maximum resource-delay-intensive UEs, one of i) using a higher subcarrier spacing (SCS) for the BWP, ii) transferring at least some of the resource-delay-intensive UEs from the BWP to another BWP having a higher SCS, or iii) creating a new BWP having a higher SCS, and transferring at least some of the resource-delay-intensive UEs to the new BWP; and/or in the case the number of resource-light UEs exceeds a specified threshold for maximum resource-light UEs, one of i) reducing the number of RBs in the BWP, ii) transferring at least some of the resource-light UEs from the BWP to another BWP that has a lower number of RBs and is underloaded, or iii) creating a new BWP as a subset of the current BWP and transferring at least some of the UEs to the new BWP.

3. The method of claim 1, further comprising:

   periodically analyzing, by the BWP analytics module, an interference level of a BWP; and
   if a percentage of PRBs in the BWP have an interference greater than an average interference of the BWP, identifying the BWP as a candidate for modification.

4. The method of claim 1, further comprising:
   analyzing the BWP performance measures to estimate a threshold to determine an optimal set of BWPs.

5. The method of claim 1, wherein the BWP analytics module is at the near-RT RIC and subscribes to the BWP performance measures from the DU, the method further comprising: analyzing the BWP performance measures at the near-RT RIC to determine an optimal set of BWPs.

6. The method of claim 5, wherein the BWP analytics module at the near-RT RIC is configured to send the optimal BWP set to the DU based on the analysis of the BWP performance measures.

7. The method of claim 1, wherein the BWP analytics module is at the gNB-DU and is configured to analyze BWP performance measures present at the gNB-DU to determine an optimal set of BWPs.

8. A system for optimizing bandwidth part (BWP) management for 5G wireless network, comprising:

   a BWP analytics module located at one of near-real-time radio access network intelligent controller (near-RT RIC) or a distributed unit (DU) of a gNodeB (gNB), configured to analyze BWP perfromance measures including at least one of a physical resource block (PRB) utilization difference, a delay violation percentage corresponding to a percentage of logical channels not able to meet delay requirements for quality of service (QoS) profile assigned to the logical channels, a throughput, and interference levels of a BWP to classify the BWP;
   wherein the BWP anyltyics module is configured to periodically analyze at least one of PRB utilization, throughput, and delay requirements of at least one user equipipment (UE); and
   categorize the at least one UE into one of a plurality of BWP classifications based on the analyzing of the at least one of PRB utilization, throughput, and delay requirements.

9. The system of claim 8, wherein the BWP analytics module is configured to analyze the number of UEs per each one of the plurality of BWP classification to implement one of a plurality of BWP management actions, wherein the BWP classifications for the UEs include: resource-intensive UEs; resource-delay-intensive UEs; and resource-light UEs.

10. The system of claim 9, wherein,

   in the case the number of resource-intensive UEs exceeds a specified threshold for maximum resource-intensive UEs, the BWP analytics module is configured to execute one of i) increasing the number of resource blocks (RBs) in the BWP, ii) transferring at least some of the resource-intensive UEs from the BWP to another BWP that is underloaded, or iii) creating a new BWP and transferring at least some of the resource-intensive UEs to the new BWP;
   in the case the number of resource-delay-intensive UEs exceeds a specified threshold for maximum resource-delay-intensive UEs, the BWP analytics module is configured to execute one of i) using a higher subcarrier spacing (SCS) for the BWP, ii) transferring at least some of the resource-delay-intensive UEs from the BWP to another BWP having a higher SCS, or iii) creating a new BWP having a higher SCS, and transferring at least some of the resource-delay-intensive UEs to the new BWP; and/or
   in the case the number of resource-light UEs exceeds a specified threshold for maximum resource-light UEs, the BWP analytics module is configured to execute one of i) reducing the number of RBs in the BWP, ii) transferring at least some of the resource-light UEs from the BWP to another BWP that has a lower number of RBs and is underloaded, or iii) creating a new BWP as a subset of the current BWP and transferring at least some of the UEs to the new BWP.

11. The system of claim 9, wherein the BWP analytics is configured to:

analyze the interference levels of a BWP; and
if a percentage of PRBs in the BWP has an interference greater than an average interference of the BWP, identify the BWP as a candidate for modification.

12. The system of claim 11, wherein the BWP analytics module is configured to:
analyze the BWP performance measures to estimate a threshold to determine an optimal set of BWPs.

13. The system of claim 8, wherein the BWP analytics module is at the near-RT RIC and subscribes to the BWP performance measures from the DU, and wherein the BWP analytics module is further configured to analyze the BWP performance measures at the near-RT RIC to determine an optimal set of BWPs.

14. The system of claim 13, wherein the BWP analytics module at the near-RT RIC and is further configured to send the optimal BWP set to the DU based on the analysis of the BWP performance measures.

15. The system of claim 8, wherein the BWP analytics module is at the gNB-DU and is configured to analyze BWP performance measures present at the gNB-DU to determine an optimal set of BWPs.

FIG. 1

FIG. 2

| UE | 101 | | gNB | 106 | | AMF | |
|---|---|---|---|---|---|---|---|
| NAS | | | | | | NAS | |
| RRC | | | RRC | | | | |
| PDCP | | | PDCP | | | | |
| RLC | | | RLC | | | | |
| MAC | | | MAC | | | | |
| PHY | | | PHY | | | | |

FIG. 3

FIG. 4

FIG. 5A

FIG. 5B

EP 4 529 272 A1

FIG. 6

FIG. 7

FIG. 8

FIG. 9

FIG. 10

UE x     gNodeB (RU, DU, CU)     UPF     DNN
(e.g. for internet services)

PDU Session I for UE x, Slice id s1 (SST, SD)

DRB y1     NG-U: GTP-U tunnel for PDU session 1

IP Flows

QFI q1 (with 5QI h1 for non-GBR)

QFI q2 (with 5QI h2 for non-GBR)

DRB y2

QFI q3 (with 5QI h3 for GBR)

DNN
(for IMS
services)

PDU Session II for UE x. Slice id s2

DRB z1     NG-U: GTP-U tunnel for PDU session 2

QFI q4 (with 5QI h4 for GBR)

QFI q5 (with 5QI h5 for GBR)

DNN: Data Network Name, QFI: QoS Flow Identifier, UPF: User Plane Function (of 5G Core), 5QI: 5G QoS Identifier,
DRB: Data Radio Bearer, GBR: Guaranteed Bit Rate, SST: Slice / Service Type, SDD: Slice Differentiator

FIG. 11

FIG. 12

FIG. 13

FIG. 14

FIG. 15

## BWP Configuration Call flow

UE | gNB-DU | gNB-CU

alt [SIB1]

**1** SIB1

**Configures Initial DL/UL BWP parameters**
> ServingCellConfigCommonSIB
>> DownlinkConfigCommonSIB
>>> initialDownlinkBWP -- BWP-DownlinkCommon
>> UplinkConfigCommonSIB
>>> initialUplinkBWP -- BWP-UplinkCommon

[UE Context Setup]

**2** RRC Setup Request

**3** UE Context Setup Request

**4** UE Context Setup Response
(DU to CU RRC Information with CellGroupConfig)

**5** RRC Setup

**Configures Other (First, default) BWP parameters**
CellGroupConfig
> spCellConfig
>> spCellConfigDedicated
>>> DL BWP Parameters
>>>UplinkConfig
>>>> UL BWP Parameters

**6** RRC Setup Complete

[UE Context Modification]

**7** UE Context Modification Request

**8** UE Context Modification Response
(DU to CU RRC Information with CellGroupConfig)

**9** RRC Reconfiguration

**Adds/Modifies/delete BWP configuration**
CellGroupConfig
> spCellConfig
>> spCellConfigDedicated
>>> DL BWP Parameters
>>>UplinkConfig
>>>> UL BWP Parameters

**10** RRC Reconfiguration Complete

[UE Context Modification Required]

**11** UE Context Modification Required
(DU to CU RRC Information with CellGroupConfig)

**12** RRC Reconfiguration

**Adds/Modifies/delete BWP configuration**
CellGroupConfig
> spCellConfig
>> spCellConfigDedicated
>>> DL BWP Parameters
>>>UplinkConfig
>>>> UL BWP Parameters

**13** RRC Reconfiguration Complete

FIG. 16

## SupportedBandwidth information element

```
-- ASN1START
-- TAG-SUPPORTEDBANDWIDTH-START

SupportedBandwidth ::=      CHOICE {
    fr1                     ENUMERATED {mhz5, mhz10, mhz15, mhz20, mhz25, mhz30, mhz40, mhz50, mhz60, mhz80, mhz100},
    fr2                     ENUMERATED {mhz50, mhz100, mhz200, mhz400}
}

-- TAG-SUPPORTEDBANDWIDTH-STOP
-- ASN1STOP
```

FIG. 17

FIG. 18

E2 node: DU

Near-RT RIC

E2 Node

1) RIC SUBSCRIPTION PROCEDURE (RIC Event Trigger, Action=REPORT)

Near-RT subscribes to following performance measurements from DU:

- DL PRB utilization per UE and per BWP
- UL PRB utilization per UE and per BWP
- Number of DL and UL packets (RLC SDUs) per UE
- DL/UL packet delay
- UE and Cell level throughput
- Interference levels of PRBs

2) E2 Node detects RIC Event Trigger

3) RIC INDICATION(REPORT)

4) Associated procedure instance continues

Near-RT RIC

E2 Node

FIG. 19

E2 node: DU

FIG. 20

**Near-RT RIC analyses the parameters and decides to update UE BWP information**

E2 Node :DU

Near-RT RIC

E2 Node

RIC internal event

Near-RT RIC detects event trigger

1) Near-RT RIC performs action

2) RIC CONTROL REQUEST

Set Timer RIC control
- Near-RT RIC sends updated UE BWP information to DU

**DU checks the updated BWP and applies it on the UE and sends RIC control Ack**

3) Check request validity

alt — [a) Request is accepted]

Associated procedure instance initiated

alt — [i) E2 Node successfully executes requested control procedure]

4 i) RIC CONTROL ACKNOWLEDGE

[ii) E2 Node fails to execute requested control procedure]

4 ii) RIC CONTROL FAILURE (Cause = Failure to execute)

[b) Request is rejected]

4 ii) RIC CONTROL FAILURE (Cause provides reason for rejection)

Clear Timer RIC control

Near-RT RIC

E2 Node

FIG. 21

FIG. 22

EP 4 529 272 A1

Europäisches
Patentamt

European
Patent Office

Office européen
des brevets

# EUROPEAN SEARCH REPORT

**Application Number**

EP 24 20 1388

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/266920 A1 (YAN HAIDONG [CN]) 26 August 2021 (2021-08-26) * abstract par. 101, 101, 51, 52, 14, 16, 148, 103 * | 1-15 | INV. H04W36/06 H04W28/20 |
| | ----- | | ADD. |
| A | PATRICIELLO NATALE ET AL: "An E2E simulator for 5G NR networks", SIMULATION MODELLING PRACTICE AND THEORY, ELSEVIER, AMSTERDAM, NL, vol. 96, 21 May 2019 (2019-05-21), XP085758470, ISSN: 1569-190X, DOI: 10.1016/J.SIMPAT.2019.101933 [retrieved on 2019-05-21] * the whole document * | 1-15 | H04W36/16 H04W36/20 H04W36/22 H04W72/0453 H04W88/08 H04W88/14 |
| | ----- | | |
| A | BOJOVIC BILJANA BILJANA BOJOVIC@CTTC ES ET AL: "Implementation and evaluation of frequency division multiplexing of numerologies for 5G new radio in ns-3", PROCEEDINGS OF THE GENETIC AND EVOLUTIONARY COMPUTATION CONFERENCE COMPANION, ACMPUB27, NEW YORK, NY, USA, 13 June 2018 (2018-06-13), pages 37-44, XP058819842, DOI: 10.1145/3199902.3199905 ISBN: 978-1-4503-9352-2 * section 6 * | 1-15 | |

**TECHNICAL FIELDS SEARCHED (IPC)**

H04W

-/--

The present search report has been drawn up for all claims

| Place of search | Date of completion of the search | Examiner |
|---|---|---|
| Munich | 16 January 2025 | Domingos, Luis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 20 1388

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | "3rd Generation Partnership Project; Technical Specification Group Radio Access Network; Study on network energy savings for NR (Release 18)", 3GPP STANDARD; TECHNICAL REPORT; 3GPP TR 38.864, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. V18.1.0 30 March 2023 (2023-03-30), pages 1-72, XP052284549, Retrieved from the Internet: URL:https://ftp.3gpp.org/Specs/archive/38_series/38.864/38864-i10.zip 38864-i10.docx [retrieved on 2023-03-30] * the whole document * ----- | 1-15 | |

**TECHNICAL FIELDS SEARCHED (IPC)**

The present search report has been drawn up for all claims

| Place of search | Date of completion of the search | Examiner |
|---|---|---|
| Munich | 16 January 2025 | Domingos, Luis |

EPO FORM 1503 03.82 (P04C01)

## ANNEX TO THE EUROPEAN SEARCH REPORT
## ON EUROPEAN PATENT APPLICATION NO.

EP 24 20 1388

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2025

| Patent document cited in search report | Publication date | Patent family member(s) | | Publication date |
|---|---|---|---|---|
| US 2021266920 A1 | 26-08-2021 | CN | 111132278 A | 08-05-2020 |
| | | EP | 3863337 A1 | 11-08-2021 |
| | | US | 2021266920 A1 | 26-08-2021 |
| | | WO | 2020088544 A1 | 07-05-2020 |

EPO FORM P0459

For more details about this annex : see Official Journal of the European Patent Office, No. 12/82